# EUROPÄISCHE PATENTSCHRIFT

(11) **EP 3 328 759 B1**
(45) Veröffentlichungstag und Bekanntmachung des Hinweises auf die Patenterteilung: **14.10.2020**
(21) Anmeldenummer: 16751142.7
(22) Anmeldetag: 21.06.2016
(51) Int. Cl.: G06Q 50/28, B65G 1/04, G06Q 10/08, B65G 1/137

(54) **VERFAHREN UND SYSTEM ZUR AUSLIEFERUNG VON WAREN IN LIEFERGEBINDEN**
METHOD AND SYSTEM FOR DELIVERING ITEMS IN DELIVERY CONTAINERS
PROCÉDÉ ET SYSTÈME DE LIVRAISON DE MARCHANDISES DANS DES RÉCIPIENTS DE LIVRAISON

(30) Priorität: 27.07.2015 AT 506712015
(43) Veröffentlichungstag der Anmeldung: 06.06.2018
(73) Patentinhaber: TGW Logistics Group GmbH, 4614 Marchtrenk (AT)
(72) Erfinder: SCHRÖPF, Harald Johannes, 4600 Wels (AT); WINKLER, Markus, 4814 Altmünster (AT)
(74) Vertreter: Burger, Hannes
(86) Internationale Anmeldenummer: PCT/AT2016/050217
(87) Internationale Veröffentlichungsnummer: WO 2017/015681

(56) Entgegenhaltungen:
- EP-A1- 1 801 040
- EP-A1- 1 814 809
- EP-A1- 2 119 643
- EP-A2- 1 462 394
- WO-A1-00/54229
- WO-A1-97/00218
- WO-A1-2013/147597
- WO-A2-2014/009257
- DE-A1- 3 220 415
- FR-A1- 3 007 957
- GB-A- 998 434

## Beschreibung

Die Erfindung betrifft ein Verfahren und ein System zur Auslieferung von Waren in Liefergebinden, wie in den Oberbegriffen der Ansprüche 1 und 12 beschrieben. Bei herkömmlichen Warenversandsystemen werden von einem Warenempfänger (Kunden) über das Internet auf einer Bestellplattform eines Warenanbieters (Lieferant) online Waren bestellt. Die Waren sind Lebensmittel und andere Güter des täglichen Lebens. Beim Warenanbieter werden die Waren für eine Bestellung in ein oder mehrere Liefergebinde kommissioniert und danach das / die Liefergebinde an eine Zustelladresse des Warenempfängers oder an ein Pufferlager zur Aufbewahrung der Liefergebinde zugestellt. Wird das Liefergebinde an ein Pufferlager zugestellt, so kann der Warenempfänger die bestellte Ware jederzeit vom Pufferlager abholen. Solche Pufferlager verfügen über Lagerregale, ein automatisiert betriebenes Lagerbediengerät, eine Ausgabestation mit einem Andienungsplatz und einer Eingabevorrichtung. Der Warenanbieter beliefert das Pufferlager mit Liefergebinden. Die Liefergebinde werden am Pufferlager an ein Bereitstellsystem übergeben, von dem das Lagerbediengerät die Liefergebinde abholt und anschließend in die Lagerregale einlagert. Der Warenempfänger kann an der Eingabevorrichtung einen zuvor beispielweise als elektronische Nachricht erhaltenen Zugangscode eingeben, um die bestellte Ware an der Ausgabestation bereitzustellen. Das Liefergebinde ist im Pufferlager auf einem Lagerfach zwischengelagert und wird über ein automatisiert betriebenes Lagerbediengerät ausgelagert sowie zur Ausgabestation gefördert und auf den Andienungsplatz abgegeben.

Solche Warenversandsysteme sind beispielweise aus der WO 00/54229 A1 und WO 03/019425 A1 bekannt.

Nach der WO 00/54229 A1 werden eine Vielzahl von Liefergebinden in mobilen Containern zusammengefasst und diese Container im Pufferlager bereitgestellt. Der Container und das Pufferlager sind jeweils mit einem eigenständigen Transportsystem versehen. Um die Liefergebinde aus dem Container auszulagern, bedarf es beider Transportsysteme. Dadurch steigt die Komplexität des Warenversandsystems und ist auch die Handhabung des Containers schwieriger. Die WO 00/54229 A1 offenbart ein Verfahren zur Auslieferung von Waren gemäß dem Oberbegriff des Anspruchs 1 sowie ein System zur Auslieferung von Waren gemäß dem Oberbegriff des Anspruchs 12.

Aus der WO 97/00218 A1 ist ein Versorgungslager bekannt, umfassend ein Lagersystem zum Bereitstellen der auf Warenträgern (Tablare) vereinzelt abgelegten Waren, ein Kommissioniersystem zur Zusammenstellung der Waren gemäß Kommissionieraufträgen auf den Warenträgern und eine Beladestation zum Bereitstellen von Transportgestellen und Umladen der Liefergebinde auf diese Transportgestelle. Die Transportgestelle bilden in übereinander angeordneten horizontalen Regalzeilen und nebeneinander angeordneten vertikalen Regalspalten ausgebildete Stellfächer aus, in welche die Warenträger für einen oder mehrere Kommissionieraufträge einschiebbar sind.

Der vorliegenden Erfindung liegt die Aufgabe zugrunde, ein Verfahren und ein System zur Auslieferung von Waren in Liefergebinden bereitzustellen, welches einen leistungsfähigen Betrieb eines Pufferlagers erlaubt.

Die Aufgabe der Erfindung wird durch folgende Schritte gelöst:
Ermittlung einer Beladungsordnung für die Liefergebinde zu Kommissionieraufträgen durch ein Rechnersystem, und
Beladen des zumindest einen Transportgestelles mit den Liefergebinden im Versorgungslager in der vom Rechnersystem ermittelten Beladungsordnung auf die in übereinander angeordneten horizontalen Regalzeilen und/oder nebeneinander angeordneten vertikalen Regalspalten ausgebildeten Stellfächer, und
Bereitstellung des zumindest einen Transportgestelles an der Andockvorrichtung im Pufferlager derart, dass die in den übereinander angeordneten horizontalen Regalzeilen und nebeneinander angeordneten vertikalen Regalspalten ausgebildeten Stellfächer im Zugriffsbereich des Lagerbediengerätes liegen und das Lagerbediengerät auf die Liefergebinde an diesen Stellfächern zugreifen kann, und
Umlagerung der Liefergebinde durch das Lagerbediengerät während der Bereitstellung des Transportgestelles an der Andockvorrichtung von den Stellfächern entweder auf die Lagerfächer im Pufferlager, wenn diese von einem Warenempfänger an der Ausgabestation noch nicht angefordert wurden, oder auf den Andienungsplatz, wenn diese von einem Warenempfänger an der Ausgabestation angefordert werden.

Es erfolgt die Beladung der Transportgestelle in einem Versorgungslager getrennt vom einem Pufferlager (Abholdepot) nach einer definierten Beladungsordnung. Die Beladungsordnung berücksichtigt insbesondere die Sortierung der Liefergebinde nach Kundenbestellungen bzw. Kommissionieraufträgen. Eine Kundenbestellung, welche im Regelfall mehrere Liefergebinde umfasst, wird in einem Stellfach oder mehreren Stellfächern zusammengefasst. Eine Sortierung der Liefergebinde im Pufferlager ist nicht erforderlich. Vielmehr braucht das Lagerbediengerät nur noch auf die Liefergebinde der Kundenbestellungen zugreifen. Das Pufferlager kann dadurch mit einer sehr hohen Einlagerleistung betrieben werden, selbst wenn nur ein Lagerbediengerät eingesetzt wird. Darüber hinaus kann das Lagerbediengerät je nach Bedarf entweder zum Lagerbetrieb genutzt werden, um sämtliche Liefergebinde aus dem Transportgestell auf Lagerfächer umzulagern, oder zum direkten Auslagerbetrieb genutzt werden, um Liefergebinde, welche sich während der Bereitstellung noch am Transportgestell befinden und zu diesem Zeitpunkt vom Warenempfänger an der Ausgabestation abgeholt werden möchten, aus dem Transportgestell auf die Ausgabestation umzulagern. Die Möglichkeit zwischen dem Lagerbetrieb und dem Auslagerbetrieb zu wechseln, hat den Vorteil, dass die Liefergebinde nach einer Eingabe an der Ausgabestation innerhalb kürzester Zeit an die Ausgabestation umgelagert werden und der Warenempfänger seine Ware rasch erhält. Der Wechsel vom Lagerbetrieb in den direkten Auslagerbetrieb wird durch den Anforderungsbefehl bewirkt. Dadurch verkürzt sich für den Warenempfänger die Wartezeit an der Ausgabestation, wenn dieser seine Ware abholt. Danach kann das Lagerbediengerät wieder unmittelbar den Lagerbetrieb aufnehmen, sodass die Einlagerleistung kaum beeinflusst wird. Die Transportgestelle können demnach auch sehr rasch entleert werden, sodass auch die Bereitstellzeiten für die Liefergebinde verkürzt werden können.

Von Vorteil ist, wenn das Transportgestell in einem Stellfach einen einzigen Stellplatz, auf welchem das Liefergebinde abgestellt wird, oder eine Vielzahl von hintereinander angeordneten Stellplätzen aufweist, auf welchen eine Mehrzahl an Liefergebinden abgestellt werden. Das Transportgestell kann abhängig vom Bestellvolumen und von der Umschlagleistung angepasst werden. Grundsätzlich kann bei durchschnittlich weniger umfangreichen Bestellungen ein Transportgestell mit weniger Stellplätzen verwendet werden.

In einer bevorzugten Ausführung weist das Transportgestell übereinander maximal fünf Stellfächer und nebeneinander maximal drei Stellfächer auf und die Stellfächer bilden jeweils maximal drei Stellplätze aus, sodass ein Transportgestell mit maximal 45 Liefergebinde beladen werden kann, wobei das Liefergebinde eine Länge von maximal 700mm, eine Breite von maximal 600mm und Höhe von maximal 400mm ausbildet. Das Transportgestell hat bevorzugt eine maximale Breite von 2100 mm, eine maximale Tiefe von 1500 mm und eine maximale Höhe von 2000 mm. Das Transportgestell ist in einer Größenabmessung, die ein manuelles Beladen mit (kundenbezogenen) befüllten Liefergebinden und ein manuelles Entladen der Liefergebinde, sofern diese vom Pufferlager an das Versorgungslager retourniert werden, sowie einen manuellen Transport beispielweise mit Handgabelhubwagen erlaubt. Die retournierten Liefergebinde können dabei leer sein oder eine Retourware enthalten.

Bevorzugt können die Liefergebinde im Stellfach gegen zumindest ein Lagesicherungsmittel positioniert werden, wenn auf dem Transport des Traggestelles die Liefergebinde in den Stellfächern verrutschen, oder von zumindest einem Lagesicherungsmittel positioniert gehalten werden, um eine Rutschbewegung der Liefergebinde in den Stellfächern zu verhindern. Das Transportgestell wird bevorzugt mit einem Transportfahrzeug (LKW) zwischen dem Versorgungslager und Pufferlager transportiert. Das Lagesicherungsmittel dient dem sicheren Transport der Liefergebinde, sodass auch gegen Bruch empfindliche Ware nicht beschädigt wird.

Vorteilhaft ist auch, wenn die Liefergebinde nach dem Kommissionieren der Ware zu einem Beladesystem transportiert werden, wo auch die Transportgestelle bereitgestellt und mit den Liefergebinden beladen werden, wobei die Liefergebinde vor dem Beladen der Transportgestelle mittels einer ersten Erfassungseinrichtung und die Transportgestelle mittels einer zweiten Erfassungseinrichtung identifiziert werden, und dass vom Rechnersystem eine Zuteilung der Liefergebinde auf das jeweilige Transportgestell und die jeweiligen Stellfächer im Transportgestell erfolgt. Die erste Erfassungseinrichtung kann einen Datenträger am Liefergebinde und die zweite Erfassungseinrichtung einen Datenträger am Transportgestell lesen. Auch wenn eine erste Erfassungseinrichtung und zweite Erfassungseinrichtung als eigenständige Erfassungseinrichtungen beschrieben werden, so versteht sich, dass auch nur eine einzige Erfassungseinrichtung verwendet werden kann, welche sowohl die Liefergebinde als auch die Transportgestelle durch Lesen jeweils eines Datenträgers identifizieren kann. Demnach entspricht die erste Erfassungseinrichtung der zweiten Erfassungseinrichtung. Durch die erfindungsgemäße Maßnahme wird einerseits eine eindeutige Zuordnung von Liefergebinden zu Transportgestellen und andererseits eine eindeutige Zuordnung von Liefergebinden in einem Transportgestell zu den Stellfächern erreicht, sodass auch Fehllieferungen vermieden werden können. Damit können Retouren und der damit verbundene hohe logistische Aufwand reduziert werden.
Besonders vorteilhaft ist es auch, wenn das Rechnersystem aus einer Vielzahl von Kommissionieraufträgen für jeden Kommissionierauftrag eine Beladezone ermittelt, wenn die Beladungsordnung festgelegt wird, wobei die Beladezone ein Stellfach oder mehrere Stellfächer umfassen kann, sodass in einer Beladezone eine Anzahl an Liefergebinden vorhanden ist. Bei durchschnittlich umfangreicheren Bestellungen, welche mehr als ein Liefergebinde umfassen, werden innerhalb einer Beladezone abhängig von der Anzahl an Stellplätzen je Stellfach die maximale Anzahl an Liefergebinden gelagert. Dies erlaubt ein einfaches Beladen der Transportgestelle im Versorgungslager und eine einfache Entnahme der Liefergebinde aus dem Transportgestell im Pufferlager. Zudem wird eine sehr hohe Umschlagleistung erreicht. Gemäß einer anderen Maßnahme der Erfindung ist es vorgesehen, dass vor der Bereitstellung des zumindest einen Transportgestelles an der Andockvorrichtung im Pufferlager das Transportgestell mittels einer dritten Erfassungseinrichtung identifiziert und einem Rechnersystem des Pufferlagers ein Identifikationscode übermittelt wird, worauf dieses Transportgestell an einer ausgewählten Andockvorrichtung bereitgestellt wird. Dadurch kann eine falsche Bereitstellung von Transportgestellen im Pufferlager aus einer Vielzahl von Pufferlagern frühzeitig erkannt werden. Somit ist sichergestellt, dass in einem Pufferlager nur die dafür bestimmten Transportgestelle bereitgestellt werden.

Erfindungsgemäß umfasst das Pufferlager ein zweites Rechnersystem, wobei dem Rechnersystem nach dem Beladen des Transportgestelles im Versorgungslager Daten über die Beladungsordnung bereitgestellt werden. In einer bevorzugten Ausführung werden nach dem Beladen des Transportgestelles im Versorgungslager über eine Datenübertragungseinrichtung (Datenleitung) dem Rechnersystem im Pufferlager Daten über die Beladungsordnung übermittelt. Die Daten über die Beladungsordnung können über die Datenübertragungseinrichtung (Internet) dem Pufferlager avisiert werden, sodass nach Identifizierung des Transportgestelles, bevorzugt Lesen eines Identifikationscodes die dem Rechnersystem bereitgestellten Daten aufgerufen werden können. Nach einer anderen Ausführung können die Daten über die Beladungsordnung auch auf einem Datenträger, welcher am Transportgestell angebracht ist, gespeichert werden. Die Daten werden vor dem Andocken des Transportgestelles an der Andockvorrichtung im Unterbringungsabschnitt ausgelesen. Die Daten werden vom Rechnersystem dem Steuerungssystem im Pufferlager bereitgestellt, um das Lagerbediengerät entsprechend ansteuern zu können. Damit kann der Lagerbetrieb und direkte Auslagerbetrieb noch effizienter gestaltet werden.

Von Vorteil ist auch, wenn das Lagerbediengerät zu einem Kommissionierauftrag aus der Beladezone des zumindest einen Transportgestelles eine maximale Anzahl an Liefergebinden entnimmt. Damit kann der Lagerbetrieb und direkte Auslagerbetrieb noch effizienter gestaltet werden.

Die Aufgabe der Erfindung wird auch dadurch gelöst, dass
das Versorgungslager ein Rechnersystem umfasst, welches eine Beladungsordnung für die Kommissionieraufträge ermittelt, um das zumindest eine Transportgestell mit den Liefergebinden in der vom Rechnersystem ermittelten Beladungsordnung auf die in übereinander angeordneten horizontalen Regalzeilen und/oder nebeneinander angeordneten vertikalen Regalspalten ausgebildeten Stellfächer zu beladen, und
das Pufferlager die zumindest eine Andockvorrichtung für das Transportgestell umfasst, welche das zumindest eine Transportgestell derart positioniert, dass die in den übereinander angeordneten horizontalen Regalzeilen und nebeneinander angeordneten vertikalen Regalspalten ausgebildeten Stellfächer im Zugriffsbereich des Lagerbediengerätes liegen und das Lagerbediengerät auf die Liefergebinde an diesen Stellfächern zugreifen kann, wobei das Lagerbediengerät während der Bereitstellung des Transportgestelles an der Andockvorrichtung von den Stellfächern entweder auf die Lagerfächer im Pufferlager, wenn diese noch nicht an der Ausgabestation angefordert wurden, oder auf zumindest einen Andienungsplatz, wenn diese an der Ausgabestation angefordert wurden, umlagert.

Gemäß einer Ausgestaltung der Erfindung ist es auch möglich, dass das Transportgestell eine Bodenplatte, an diesem aufragende Wandteile und eine Deckplatte umfasst, wobei einer der Wandteile zwischen einer Öffnungsstellung und einer Schließstellung verstellbar ist, wobei in der Öffnungsstellung die Liefergebinde sämtlicher Stellfächer zugänglich sind und in der Schließstellung die Liefergebinde sämtlicher Stellfächer lagegesichert sind. Dadurch können während des Transportes des Transportgestelles die Liefergebinden lagegesichert werden und erst wenn der Zugriff des Lagerbediengerätes auf die Stellfächer notwendig ist, nämlich wenn das Transportgestell an der Andockvorrichtung im Unterbringungsabschnitt positioniert / arretiert ist, der Wandteil entfernt wird.

Schließlich ist auch von Vorteil, wenn die Lagerfächer in zumindest einem ortsfest aufgestellten Lagerregal in übereinander angeordneten horizontalen Regalzeilen und nebeneinander angeordneten vertikalen Regalspalten ausgebildet sind, wobei zumindest eines der Lagerregale einen Unterbringungsabschnitt ausbildet, in welchem die Andockvorrichtung vorgesehen ist, sodass das Transportgestell, wenn es an der Andockvorrichtung positioniert ist, mit den Stellfächern einen Lagerabschnitt des zumindest einen Lagerregales bildet. Das mobile Transportgestell lässt sich bedarfsweise als Lagerabschnitt in das Lagerregal integrieren, sodass das Lagerbediengerät direkt auf die Stellfächer zugreifen kann. Somit kann der oben beschriebene direkte Auslagerbetrieb bewerkstelligt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Blockdiagramm für ein System zur Auslieferung von Waren;
- Fig. 2a, 2b: eine erste Ausführung eines Versorgungslagers für das System zur Auslieferung von Waren, mit einer ersten Ausführung für ein Beladesystem zum Beladen von Transportgestellen, in Draufsicht;
- Fig. 3: eine zweite Ausführung für ein Beladesystem zum Beladen von Transportgestellen, in Frontansicht;
- Fig. 4: das Beladesystem zum Beladen von Transportgestellen nach Fig. 3, in Seitenansicht;
- Fig. 5: eine zweite Ausführung eines Versorgungslagers für das System zur Auslieferung von Waren, in Draufsicht;
- Fig. 6: ein Transportgestell für die Liefergebinde, in Draufsicht gemäß der Linie VI in Fig. 8;
- Fig. 7: ein vom Transportgestell gemäß Fig. 6 entfernbarer Wandteil, in Draufsicht;
- Fig. 8: das Transportgestell, in Ansicht gemäß der Linie VIII in Fig. 6;
- Fig. 9: das Transportgestell nach Fig. 6, in Seitenansicht;
- Fig. 10: ein Pufferlager für das System zur Auslieferung von Waren, in Ansicht;
- Fig. 11: das Pufferlager nach Fig. 10, in Ansicht gemäß der Linie XI in Fig. 12;
- Fig. 12: das Pufferlager, in Draufsicht gemäß der Linie XII in Fig. 11;
- Fig. 13: das Pufferlager, in Stirnansicht gemäß der Linie XIII in Fig. 12;
- Fig. 14: eine Andockvorrichtung für das Bereitstellsystem am Pufferlager, mit einem Transportgestell in der Andockstellung, in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

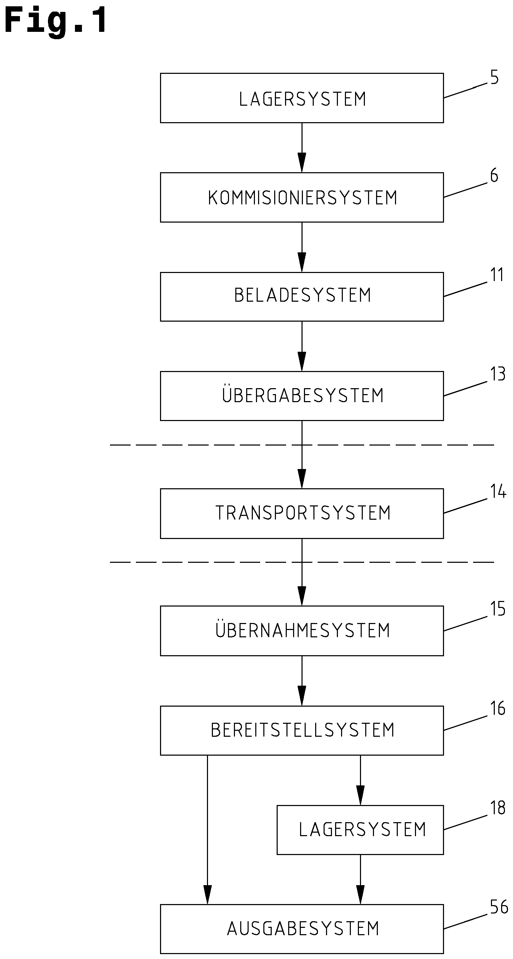

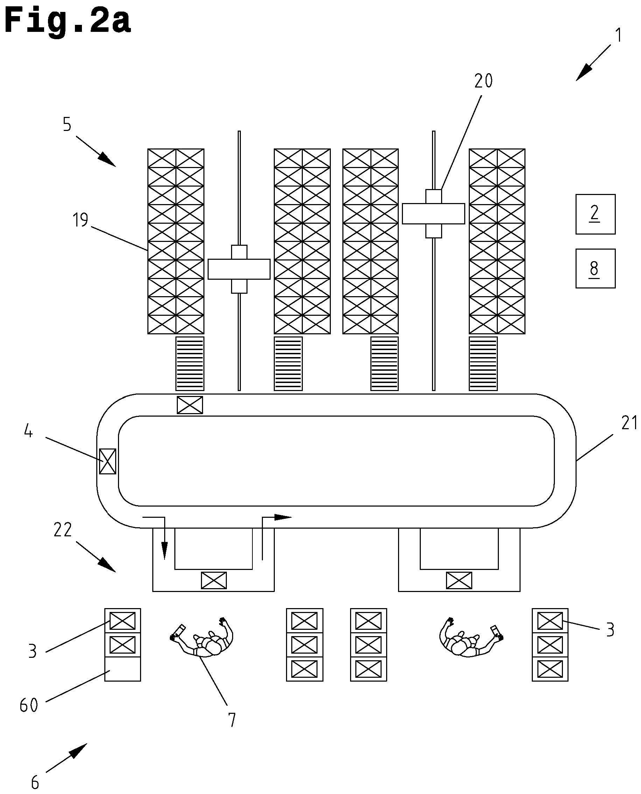

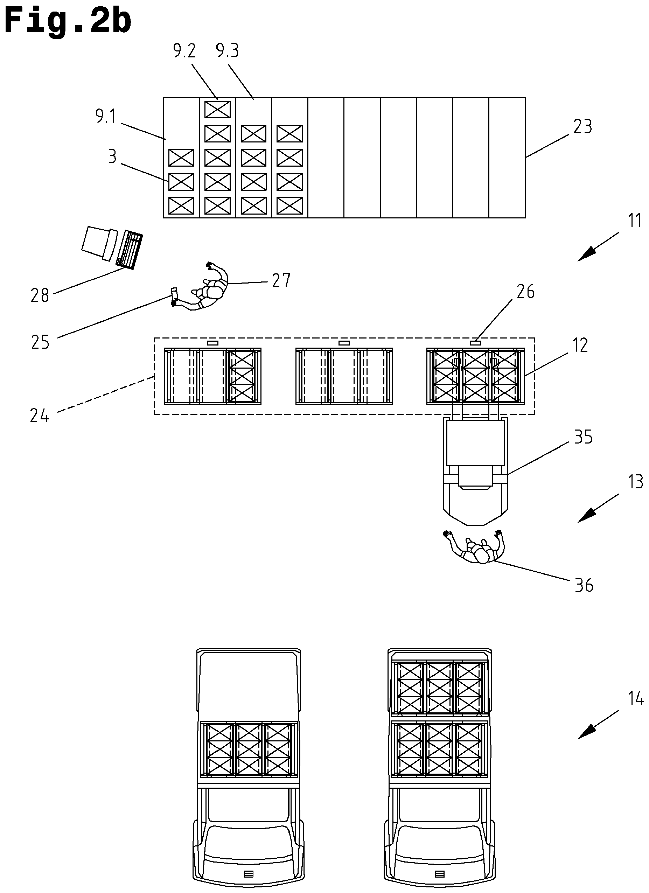

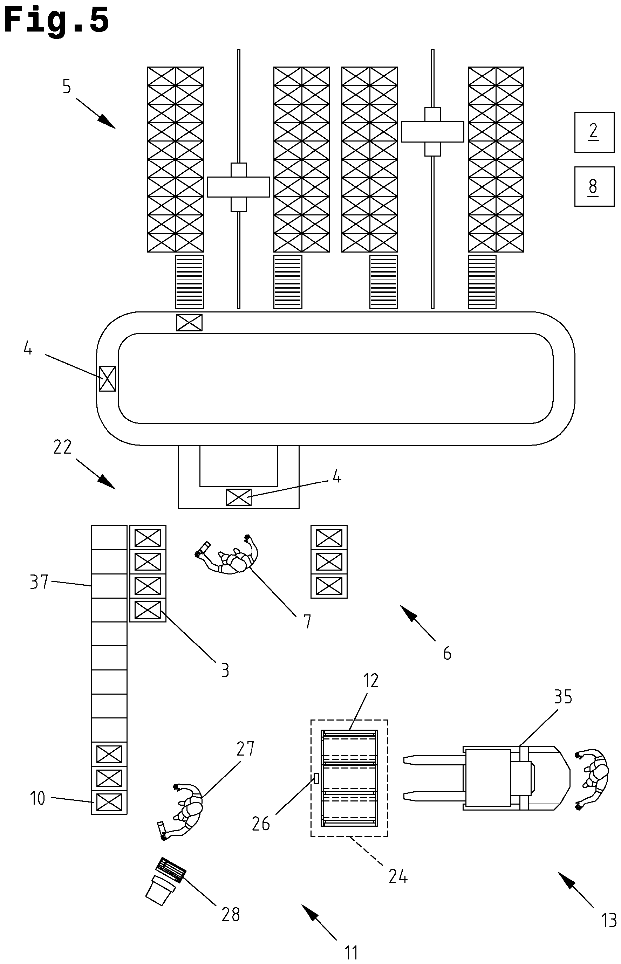

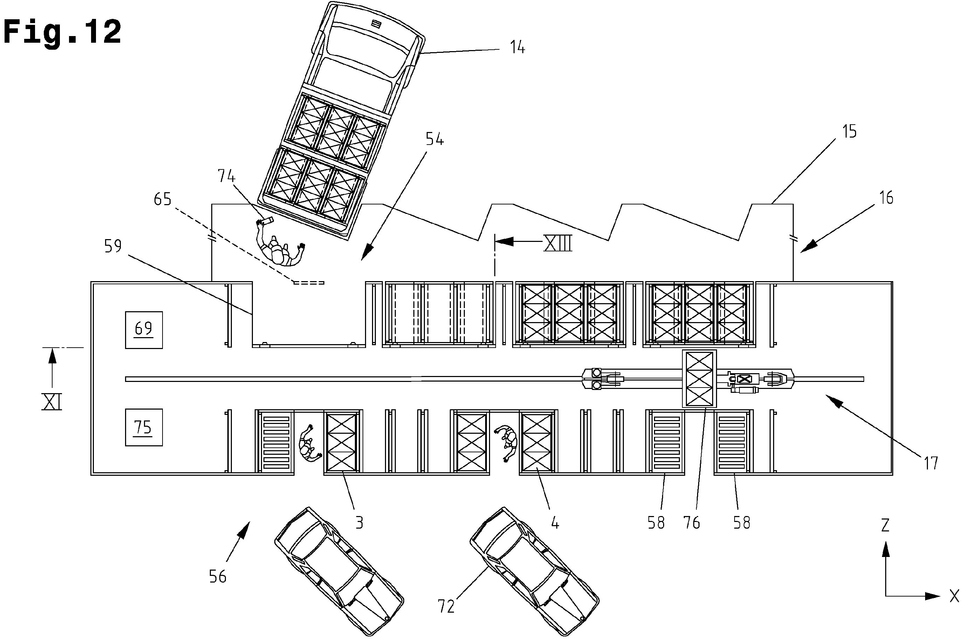

In Fig. 1 ist das System zur Auslieferung von Waren in Liefergebinden bzw. ein Warenversandsystem als Blockdiagramm dargestellt. Dabei werden Waren von einem Warenempfänger (Kunden) über das Internet auf einer Bestellplattform eines Warenanbieters (Lieferant) online Waren bestellt. Auch ist die Bestellung über Telefon oder anderen Medien möglich. Basierend auf dieser Kundenbestellung wird in einem Versorgungslager 1 (Fig. 2a, 2b; 5) ein elektronischer Kommissionierauftrag erzeugt. Im Nachfolgenden wird davon ausgegangen, dass solche Kommissionieraufträge an einem Rechnersystem 2 erfasst wurden und dem Versorgungslager 1 für das Kommissionieren von (kundenbezogenen) Liefergebinden 3 bereitgestellt werden. Ein Kommissionierauftrag kann ein Liefergebinde 3 oder eine Mehrzahl von Liefergebinden 3 umfassen, wobei das Liefergebinde 3 ein Mehrweggebinde ist. Dabei ist unter Mehrweggebinde ein Behälter, ein Tablar und dgl. zu verstehen, der / das befüllt aus dem Versorgungslager 1 ausgeliefert wird und zu einer Wiederauffüllung durch den Warenanbieter im Versorgungslager 1 zurückgenommen wird. Die bestellte Ware 4 befindet sich bevorzugt in zumindest einem Sack, zumindest einer Tragtasche, zumindest einem Behälter, zumindest einem Karton und dgl., welche im Lagergebinde 3 bevorratet sind. Der Kunde kann am Pufferlager seine bestellte Ware 4 aus dem Liefergebinde 3 entnehmen und den Sack, die Tragtaschen usw. nach Hause mitnehmen. Dies erlaubt eine schnelle Entnahme der Waren 4 am Andienungsplatz 58 (Fig. 12). Grundsätzlich wäre aber auch eine Ausführung denkbar, bei der Einwegbehälter als Liefergebinde verwendet werden, welche das Pufferlager 53 verlassen und vom Kunde nach Hause mitgenommen werden können.

Am Rechnersystem 2 werden zu Kundenbestellungen / Kommissionieraufträge Daten erfasst. Beispielweise werden vom Warenempfänger (Kunden) Daten über die Wohnadresse, eine gewünschte Lieferadresse, Abholzeitpunkt und dgl. verwaltet. Auch kann am Rechnersystem 2 basierend auf den Daten der Kundenbestellung / des Kommissionierauftrages ein ausgewähltes Pufferlager 53 (Abholdepot) erfasst werden, zu welchem die bestellte Ware 4 geliefert werden soll. Auch wird der Lagerort für die nachfolgend beschriebenen Transportgestelle 12 erfasst, daher jenes Pufferlager 53 bestimmt, an welchem das Transportgestell 12 bereitgestellt werden soll, damit der Warenempfänger die Ware 4 zu seiner Bestellung am gewünschten Pufferlager 53 (bzw. Lieferadresse) zu einem gegebenenfalls gewünschten Abholzeitpunkt abholen kann.

Im Versorgungslager 1, wie es beispielhaft in den Fig. 2a, 2b dargestellt ist, werden die Waren 4, beispielweise aus der Lebensmittelindustrie, in einem Lagersystem 5 bereitgestellt. Üblicherweise sind die Waren 4 auf einem Ladehilfsmittel, beispielweise Palette, Tablar oder Behälter, gelagert und werden diese zu einem Kommissioniersystem 6 gefördert, wo zu einem Kommissionierauftrag die Waren 4 vom Ladehilfsmittel entnommen und in zumindest einem Liefergebinde 3 abgelegt wird. Andererseits kann die Ware 4 auch in einem Karton verpackt werden, welcher als Packeinheit in das Liefergebinde 3 abgelegt werden. Auch kann die Ware 4 eine so genannte "kleinste Verkaufseinheit" (stock keeping unit) bzw. ein "Kollo" sein, bei der eine bestimmte Anzahl gleicher Artikel beispielweise durch eine Kunststoffummantelung miteinander verbunden sind und die Mindestabgabemenge für einen Auftrag darstellt. Die Anzahl der Artikel kann auch lediglich ein Stück betragen.

Es handelt sich demnach bei dieser Variante von Kommissionierung um das so genannte Kommissionierprinzip "W are zum Mann". Demnach wird einer Kommissionierperson 7 ein fester Arbeitsplatz zugewiesen, von dem sie sich so wenig und selten wie möglich wegbewegt. Die zu kommissionierenden Waren 4 werden zur Kommissionierperson 7 transportiert, welche die Waren 4 in (leere oder teilbefüllte) Liefergebinde 4 gemäß den Kommissionieraufträgen ablegt. In Fig. 2a wird dieses Kommissionierprinzip gezeigt.

Alternativ dazu, kann die Kommissionierung auch nach dem so genannten Kommissionierprinzip "Mann zum Ware" erfolgen, bei dem sich eine Kommissionierperson zwischen Lagerregalen bewegt und die Waren 4 aus den Lagerregalen entnimmt und in das (kundenbezogene) Liefergebinde 3 ablegt. Das Liefergebinde 3 befindet sich dabei auf einem Kommissionierwagen, welcher von der Kommissionierperson bewegt wird.

Ebenso kann die Kommissionierung der Ware 4, daher das Ablegen der Ware 4 im / am Liefergebinde 3 durch einen Beladungsroboter automatisch erfolgen.

Die (kundenbezogenen) Liefergebinde 3 können nach einer ersten Ausführung gemäß Fig. 2b auf Pufferplätzen 9 oder nach einer zweiten Ausführung gemäß Fig. 5 auf einem Pufferplatz 10 bereitgestellt werden.

Danach werden in einem Beladesystem 11 die Liefergebinde 3 vom Pufferplatz 9, 10 entfernt und auf zumindest ein Transportgestell 12 geladen. Üblicherweise umfassen die Kundenbestellungen durchschnittlich bis zu fünf Liefergebinde 3, sodass auf ein Transportgestell 12 zu mehreren Kommissionieraufträgen (kundenbezogene) Liefergebinde 3 geladen werden. Bei einer umfangreicheren Kundenbestellung können auf ein Transportgestell 12 auch nur zu einem einzigen Kommissionierauftrag (kundenbezogene) Liefergebinde 3 geladen werden. Darüber hinausgehend kann eine Kundenbestellung auch so viele (kundenbezogene) Liefergebinde 3 umfassen, dass diese auf mehr als ein Transportgestell 12 geladen werden müssen.

Das Beladen dieses Transportgestelles 12 kann manuell oder automatisch gemäß einer definierten Beladungsordnung erfolgen, wie im Nachfolgenden im Detail beschrieben.

An das Beladesystem 11 schließt sich eine Verladungszone an, wo von einem Übergabesystem 13 die fertig beladenen Transportgestelle 12 auf Transportfahrzeuge 14 (Transportsystem) umgeladen werden. Das Übergabesystem 13 umfasst nach einer möglichen Ausführung Gabelstapler, welche die beladenen Transportgestelle 12 vom Beladesystem 10 übernehmen und auf die Transportfahrzeuge 14 auflädt. Die Transportfahrzeuge 14 sind beispielweise LKW's.

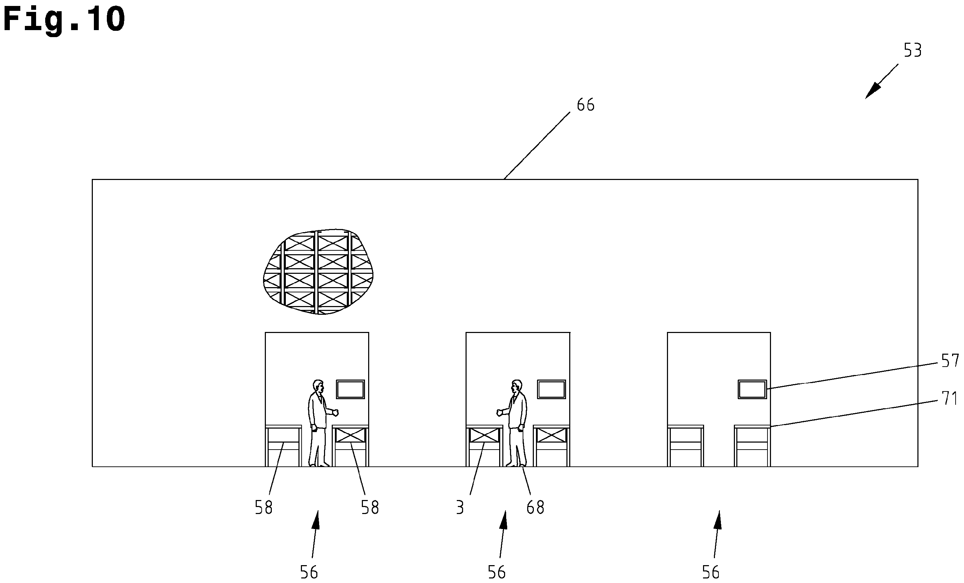

Danach werden die Transportgestelle 12 vom Transportsystem 14, insbesondere einem Transportfahrzeug, vom Versorgungslager 1 zu einem davon örtlich getrennten Pufferlager 53 (Fig. 10) transportiert. Bevorzugt werden mehrere Pufferlager 53 von einem Versorgungslager 1 mit den Liefergebinden 3 versorgt bzw. beliefert. Die örtliche Trennung zwischen Versorgungslager 1 und Pufferlager 53 ist in der Fig. 1 durch die strichlierten Linien angedeutet. Die Verteilung der Pufferlager 53 ist derart zu verstehen, dass die dezentralen Pufferlager 53 flächendeckend über ein bestimmtes Gebiet installiert werden, bevorzugt an jenen Stellen bzw. Örtlichkeiten, wo eine große Publikumsfrequenz zu erwarten ist.

Im Pufferlager 53 werden die Liefergebinde 3, welche die kommissionierten Waren 4 enthalten, zwischengelagert, bis sie vom Warenempfänger dort abgeholt werden.

Die Transportgestelle 12 werden an einem Übernahmesystem 15 vom Transportfahrzeug abgeladen und danach zu einem Bereitstellsystem 16 transportiert. Dies kann wiederum durch einen Gabelstapler erfolgen. Das Übernahmesystem 15 umfasst beispielweise eine Laderampe, an der das Transportfahrzeug 14 andockt und wo die Transportgestelle 12 abgeladen werden.

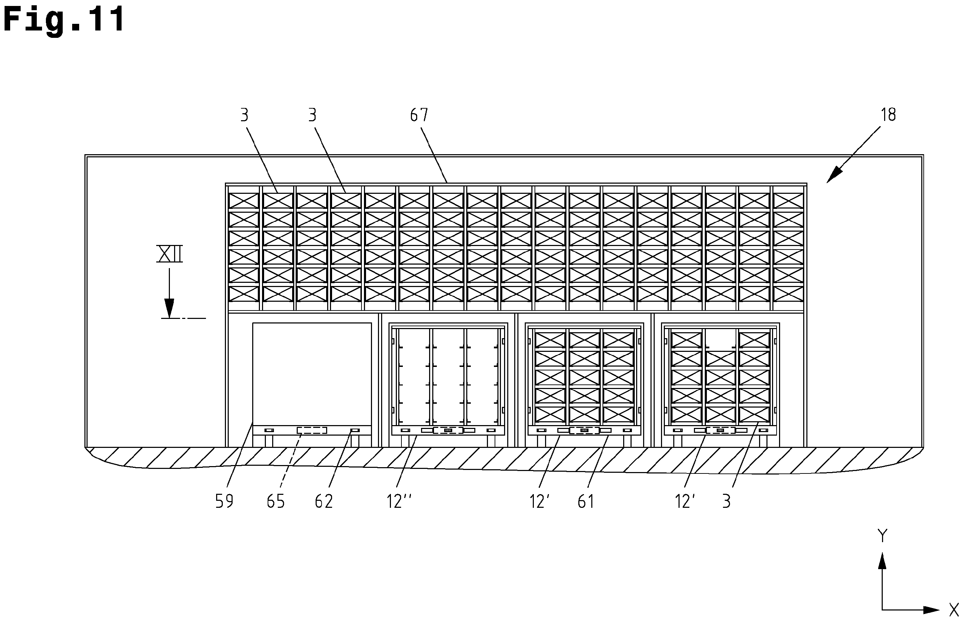

Danach werden die Liefergebinde 3, welche die kommissionierten Waren 4 enthalten, von einem automatisiert betriebenen Lagerbediengerät 17 (Fig. 12) vom Transportgestell 12 entnommen und entweder auf ein Lagersystem 18 (Fig. 11) oder an ein Ausgabesystem 56 (Fig. 10) umgelagert, wie im Nachfolgenden im Detail beschrieben. Zuvor wird noch ein Wandteil 42 in eine Öffnungsstellung bewegt. Der Warenempfänger kann schlussendlich seine bestellten Waren 4 am Ausgabesystem 56 abholen.

In den Fig. 2a und 2b ist eine erste Ausführung eines Versorgungslagers 1 schematisch dargestellt. Das Versorgungslager 1 umfasst das Lagersystem 5 zum Bereitstellen der Waren 4, das Kommissioniersystem 6 zur Zusammenstellung der Waren 4 gemäß Kommissionieraufträgen in Liefergebinde 3 und zum Bereitstellen der die kommissionierte Ware 4 enthaltenden Liefergebinde 3, das Beladesystem 11 zum Bereitstellen von Transportgestellen 12 und zum Umladen von Liefergebinden 3 auf die Transportgestelle 12, und das Übergabesystem 13 für die Übergabe der Transportgestelle 12 auf ein Transportfahrzeug 14 aufweist.

Das Lagersystem 5 umfasst ortsfest aufgestellte Lagerregale 19 und ein automatisiertes Warenverteilsystem, mittels welchem die Waren 4 aus den Lagerregalen 19 ausgelagert und zu zumindest einer Kommissionierstation 22 gefördert werden. Werden die Waren 4 in einem Ladehilfsmittel bevorratet, so wird nicht die Ware 4 als solches, sondern das Ladehilfsmittel mit der Ware 4 vom Warenverteilsystem transportiert. Das Warenverteilsystem weist zumindest ein Regalförderfahrzeug 20 und eine Fördertechnik 21, beispielweise Rollenförderer, Gurtbandförderer und dgl., auf, wobei das Regalförderfahrzeug 20 die Waren 4 zwischen den Lagerregalen 19 und der Fördertechnik 21 transportiert. Die Fördertechnik 21 verbindet das zumindest eine Regalförderfahrzeug 20 mit der zumindest einen Kommissionierstation 22 und fördert die Ware 4 zu der zumindest einen Kommissionierstation 22. Verbleibt nach dem Kommissionieren noch Ware 4, so wird diese über die Fördertechnik 21 zum Regalförderfahrzeug 20 rücktransportiert und in das Lagerregal 19 rückgelagert. Demnach dient die Fördertechnik 21 zum Antransport von Ware 4 zur Kommissionierstation 22 und zum Abtransport von (Rest)Ware 4 von der Kommissionierstation 22.

Die Lagerregale 19 bilden in übereinander liegenden Regalebenen jeweils nebeneinander eine Vielzahl von Lagerfächern aus, welche in einer Tiefenrichtung (z-Richtung) einen einzigen oder hintereinander mehr als einen Lagerplatz ausbilden, auf welchem jeweils eine Ware 4 abgestellt werden kann.

Das gezeigte Regalförderfahrzeug ist bevorzugt ein rechnergesteuertes Regalförderfahrzeug 20, welches zwischen benachbarten Lagerregalen 19 in einer Regalgasse entlang von Schienen verfahrbar ist. Das Regalförderfahrzeug 20 weist einen Vertikalmast, eine am Vertikalmast heb- und senkbar gelagerte Plattform und eine schematisch angedeutete Lastaufnahmevorrichtung auf, mittels welcher die Waren 4 bzw. Ladehilfsmittel ein- und ausgelagert werden können. Jedes Regalförderfahrzeug 20 bedient zwei gegenüberliegende Lagerregale 19.

Möglich ist auch ein Lagersystem 5, wie es beispielweise aus der WO 2013/090970 A2 bekannt ist.

Nach der gezeigten Ausführung umfasst das Kommissioniersystem 6 mehrere Kommissionierstationen 22 und zumindest einen Konsolidierungspuffer 23. Genauso gut kann auch nur eine Kommissionierstation 22 vorgesehen werden.

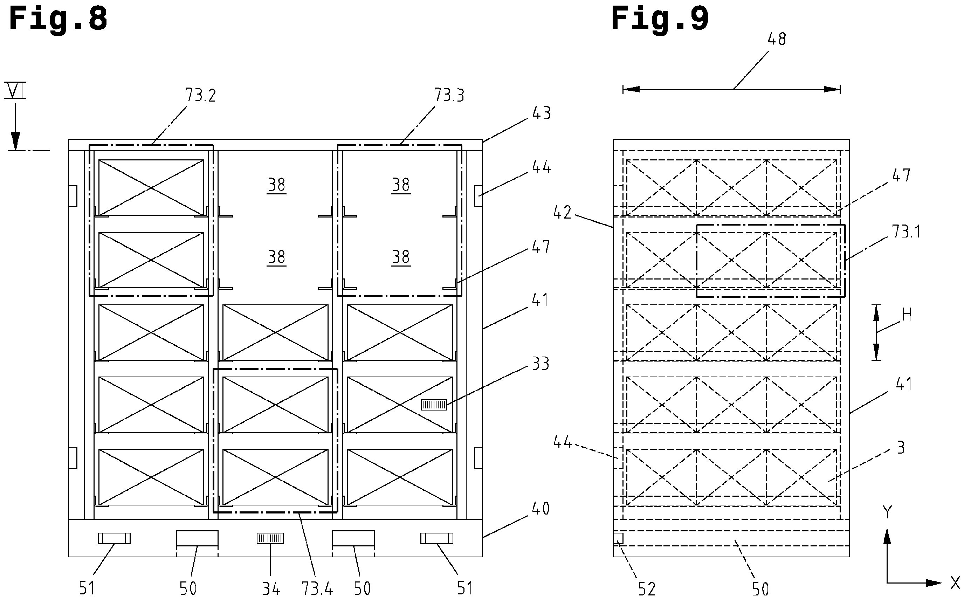

Die Kommissionierstation(en) 22 ist / sind an die Fördertechnik 21 angeschlossen und werden an dieser / diesen die Waren 4 gemäß den Kommissionieraufträgen in die (leeren) Liefergebinde 3 geladen. Sind die Waren 4 in Ladehilfsmitteln bevorratet, so werden an der Kommissionierstation 22 die Waren 4 aus den Ladehilfsmitteln entnommen und in die Liefergebinde 3 von einer Kommissionierperson 7 umgeladen. Das Umladen kann aber auch durch einen Kommissionierroboter automatisiert erfolgen. Die Liefergebinde 3 werden zuvor an der Kommissionierstation 22 auf Pufferplätzen 60 bereitgestellt. Außerdem wird vor dem Kommissioniervorgang das (leere) Liefergebinde 3 durch Auslesen eines Identifikationscodes einer betreffenden Kundenbestellung zugeordnet. Der Identifikationscode (Datenträger 33, Fig. 8) ist am Liefergebinde 3 angeordnet und wird über eine Identifikationseinrichtung, insbesondere eine Leseeinrichtung an der Kommissionierstation 22 gelesen und vom Steuerungssystem 8 erfasst. Die Leseeinrichtung ist hierzu mit dem Steuerungssystem 8 verbunden. Der Datenträger 33 ist ein eindimensionaler / zweidimensionaler Barcode, oder ein QR-Code (Quick Response Code), oder eine RFID-Etikette (Radio Frequency Identification Device). Die Leseeinrichtung ist beispielsweise ein Handscanner, wie in Fig. 2a eingetragen, oder ein RFID-Lesegerät.

Die Pufferplätze 60 können entweder manuell mit Liefergebinden 3 versorgt werden, indem die Kommissionierperson 7 die Liefergebinde 3 auf den Pufferplätzen 60 absetzt, oder automatisiert mit Liefergebinden 3 versorgt werden, indem die Liefergebinde 3 von einem Liefergebindeverteilsystem, insbesondere einer automatisierten Fördertechnik, zu den Pufferplätzen 60 angefördert und von den Pufferplätzen 60 abgefördert werden. Nach letzterer Ausführung können auch die Pufferplätze 60 mit einer automatisierten Fördertechnik ausgestattet sein.

In Fig. 2 befinden sich die Liefergebinde 3 bereits in der Bereitstellungsposition auf den Pufferplätzen 60. Werden zu einem Kommissionierauftrag beispielweise fünf Liefergebinde 3 benötigt, so können diese fünf Liefergebinde 3 an der Kommissionierstation 22 bereitgestellt und mit den entsprechenden Waren 4 befüllt werden. Die Waren 4 werden hierzu von der Fördertechnik 21 nacheinander zur Kommissionierstation 22 angefördert.

Unterschiedliche Ausführungen solcher "W are zu Mann" Kommissionierprinzipien sind beispielweise aus der WO 2013/090969 A1 oder EP 2 607 271 A1 bekannt.

Die (befüllten) Liefergebinde 3, welche die kommissionierten Waren 4 enthalten, können im Konsolidierungspuffer 23 nach Kommissionieraufträgen zu Auftragsgruppen zusammengestellt werden. Demnach werden die die kommissionierte Ware 4 enthaltenden Liefergebinde 3 im Konsolidierungspuffer 23 auf Pufferplätzen 9 bereitgestellt.

Der Konsolidierungspuffer 23 ist im einfachsten Fall durch eine Stellfläche am Lagerboden definiert, auf welcher eine Vielzahl von Kommissionieraufträgen jeweils als Auftragsgruppe zusammengestellt werden. Jeder Auftragsgruppe ist zumindest ein Pufferplatz 9 für zumindest ein Liefergebinde 3 zugeordnet. Der Pufferplatz 9 kann auch mehrere Liefergebinde 3 aufnehmen, welche in zumindest einer Reihe hintereinander gereiht werden. In Fig. 2b ist der Pufferplatz 9.1 mit Liefergebinden 3 der ersten Auftragsgruppe belegt. Die Pufferplätze 9.2, 9.3 sind mit Liefergebinden 3 der zweiten Auftragsgruppe belegt. Möglich sind auch parallel angeordnete Förderbahnen, wobei jede Förderbahn einen Kommissionierauftrag bzw. eine Kundenbestellung als Auftragsgruppe aufnehmen kann. Beispielweise bildet ein erster Kommissionierauftrag eine erste Auftragsgruppe, ein zweiter Kommissionierauftrag eine zweite Auftragsgruppe usw. Die Liefergebinde 3 können aber auch je Auftragsgruppe zu Stapel gebildet werden. Beispielweise sind die Liefergebinde 3 in einem ersten Stapel für den ersten Kommissionierauftrag eine erste Auftragsgruppe, die Liefergebinde 3 in einem zweiten Stapel für den zweiten Kommissionierauftrag eine zweite Auftragsgruppe usw.

Die Liefergebinde 3 werden dem Konsolidierungspuffer 23 manuell oder automatisch zugeführt. Beispielsweise kann die Kommissionierperson 7 die fertig kommissionierten Liefergebinde 3 dem Konsolidierungspuffer 23 manuell zuführen. Andererseits kann das Liefergebindeverteilsystem auch mit dem Konsolidierungspuffer 23 fördertechnisch verbunden sein, sodass die Liefergebinde 3 über das Liefergebindeverteilsystem zum Konsolidierungspuffer 23 automatisiert angefördert werden.

Anschließend werden die Liefergebinde 3 je Kommissionierauftrag im Beladesystem 11 auf die Transportgestelle 12 umgeladen. Das Beladesystem 11 umfasst eine Bereitstellfläche 24 zum Bereitstellen der Transportgestelle 12, eine erste Identifikationseinrichtung, insbesondere eine erste Leseeinrichtung 25 und eine zweite Identifikationseinrichtung, insbesondere eine zweite Leseeinrichtung 26, wie in Fig. 2b eingetragen. Die Leseeinrichtungen 25, 26 sind mit dem Steuerungssystem 8 verbunden. Es kann auch nur eine einzige Leseeinrichtung, bespielweise die erste Leseeinrichtung 25 verwendet werden, welche mit dem Steuerungssystem 8 verbunden ist. Werden die Transportgestelle 12 von einer Bedienperson 27 beladen, so umfasst das Beladesystem 11 auch ein optisches und/oder akustisches Bedienerführungssystem mit einem Ein- und/oder Ausgabesystem 28, welches mit dem Steuerungssystem 8 verbunden ist. Das Ein- und/oder Ausgabesystem 28 ist nach dieser Ausführung durch einen PC (Personal Computer) mit einer Eingabevorrichtung (Tastatur) gebildet.

Das Beladen des zumindest einen Transportgestelles 12 mit den Liefergebinden 3 erfolgt in einer vom Rechnersystem 2 ermittelten Beladungsordnung, wobei die Bedienperson 27 über das optische und/oder akustische Bedienerführungssystem 28 (Ein- und/oder Ausgabesystem) Beladeinstruktionen erhält, insbesondere in welche Stellfächer (Fig. 8) im Transportgestell 12 die Liefergebinde 3 abzustellen sind.

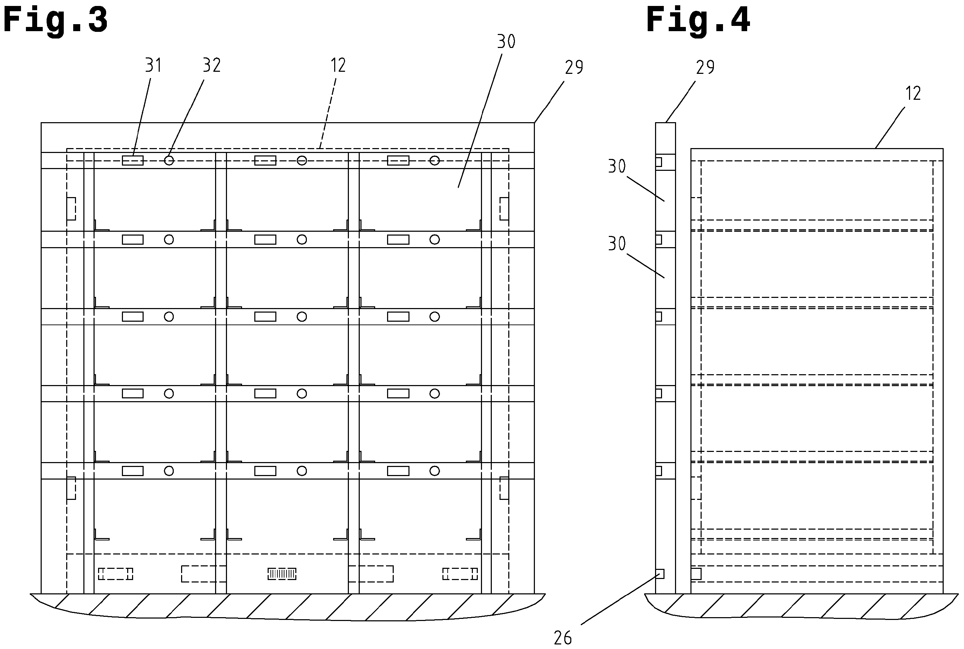

Gemäß einer Ausführung nach den Fig. 3 und 4 umfasst das Beladesystem 11 eine (nicht eingetragene) Bereitstellfläche 24 zum Bereitstellen der Transportgestelle 12, eine erste Identifikationseinrichtung, insbesondere eine erste Leseeinrichtung 25 und eine zweite Identifikationseinrichtung, insbesondere eine zweite Leseeinrichtung 26, und, sofern die Transportgestelle 12 von einer Bedienperson 27 beladen werden, zumindest einen Beladerahmen 29 und ein elektronisches Ein- und/oder Ausgabesystem. Es kann aber auch nur eine einzige Leseeinrichtung, bespielweise die erste Leseeinrichtung 25 verwendet werden. Der Beladerahmen 29 wird im Bereich der Bereitstellfläche 24 (Fig. 2b) bevorzugt ortsfest aufgestellt und das Transportgestell 12 wird relativ zum Beladerahmen 29 sowie gegenüber diesem positioniert. Der Beladerahmen 29 und das elektronische Ein- und/oder Ausgabesystem bilden ein optisches und/oder akustisches Bedienerführungssystem.

Der Beladerahmen 29 weist eine Vielzahl von übereinander und nebeneinander angeordnete Beladeöffnungen 30 auf, welche den Stellfächern 38 (Fig. 8) des Transportgestelles 12 gegenüberliegen, wenn das Transportgestell 12 zum Beladerahmen 29 ausgerichtet wurde, wie in Fig. 4 ersichtlich. Vorzugsweise entspricht die Anzahl der Beladeöffnungen 30 der Anzahl der Stellfächer 38. Eine Bedienperson 27 muss beim Beladen eines Stellfaches 38 im Transportgestell 12 eine Beladeöffnung 30 durchgreifen bzw. das Liefergebinde 3 durch die Beladeöffnung 30 hindurchreichen.

Oberhalb und/oder unterhalb jeder Beladeöffnung 30 kann am Beladerahmen 29 eine Bedieneinheit angeordnet werden. Somit ist jeder Beladeöffnung 30 eine Bedieneinheit zugeordnet. Diese Bedieneinheiten bilden das Ein- und/oder Ausgabesystem 28 und sind mit dem Steuerungssystem 8 verbunden. Bevorzugt umfassen die Bedieneinheiten jeweils eine Anzeige 31 und gegebenenfalls eine Quittiertaste 32. Anstatt der Quittiertaste 32 kann je Bedieneinheit auch eine Sender-Empfängeranordnung zur Ausbildung eines Strahlenfelds verwendet werden, welches vorzugsweise in einer Ebene liegt, in der auch eine Beladeöffnung des Beladerahmens liegt. Es versteht sich, dass jeder Beladeöffnung 30 auch mehrere Sender-Empfängeranordnungen zum Aussenden von Strahlen und zum Empfangen der ausgesendeten Strahlen zugeordnet werden, um jede Beladeöffnung vollständig mit einem Strahlenfeld abzudecken.

Die Anzeige 31 umfasst ein Anzeigenfeld, mittels welchem eine numerische oder alphanumerische (visuelle) Ausgabe von Beladeinstruktionen erfolgen kann. Nachdem die Beladung der Transportgestelle 12 bevorzugt nach einer vorberechneten Beladungsordnung erfolgen soll, kann der Bedienperson 27 angezeigt werden, in welches Stellfach 38 bzw. in welche Stellfächer 38 und auf welchen Stellplatz 39a, 39b, 39c im Stellfach 38 die Liefergebinde 3 abzustellen sind. Auch kann die Anzahl an im Stellfach 38 abzustellenden Liefergebinden 3 angezeigt werden. In einer einfacheren Form, kann bloß ein einzelnes Leuchtmittel, beispielweise Leuchtdiode, als Anzeige 31 verwendet werden, um der Bedienperson 27 anzuzeigen, dass bestimmte Liefergebinde 3 in ein vom Rechnersystem 2 vorausgewähltes Stellfach 38 bzw. in vom Rechnersystem 2 vorausgewählte Stellfächer 38 zu laden sind.

Die Quittiertaste 32 oder die Sender-Empfängeranordnung, welche mit dem Rechnersystem 2 verbunden ist, signalisiert dem Steuerungssystem 8 den Abschluss der Beladung eines Stellfaches 38 mit Liefergebinden 3.

Somit kann auch nach dieser Ausführung das Beladen des zumindest einen Transportgestelles 12 mit den Liefergebinden 3 in einer vom Rechnersystem 2 ermittelten Beladungsordnung erfolgen.

Ist ein Transportgestell 12 fertig beladen worden, so wird dieses vom Übergabesystem 13 auf ein Transportfahrzeug 14 aufgeladen. Das Übergabesystem 13 umfasst zumindest eine Übergabevorrichtung 35, beispielweise ein Flurförderzeug, wie ein Handgabelhubwagen, Elektrohubwagen oder Gabelstapler, welche von einer Bedienperson 36 bedient wird. Alternativ kann die Übergabevorrichtung 35 durch ein automatisches Flurförderzeug, wie ein fahrerloses Transportsystem, gebildet sein.

Wurde das Transportfahrzeug 14 fertig beladen, so werden die Transportgestelle 12 vom Versorgungslager 1 zu einem Pufferlager 53 transportiert.

Fig. 5 zeigt eine zweite Ausführung für das Versorgungslager 1, welches das Lagersystem 5 zum Bereitstellen der Waren 4, das Kommissioniersystem 6 zur Zusammenstellung der Waren 4 gemäß Kommissionieraufträgen in Liefergebinde 3 und zum Bereitstellen der die kommissionierte Ware 4 enthaltenden Liefergebinde 3, das Beladesystem 11 zum Bereitstellen von Transportgestellen 12 und zum Umladen von Liefergebinden 3 auf die Transportgestelle 12, und das Übergabesystem 13 für die Übergabe der Transportgestelle 12 auf ein Transportfahrzeug 14 aufweist.

Im Unterschied zur Ausführung nach Fig. 2a, 2b umfasst das Kommissioniersystem 6 ein automatisiertes Fördersystem 37, welches das Kommissioniersystem 6 und das Beladesystem 11 fördertechnisch verbindet. Die (die kommissionierte Ware 4 enthaltenden) Liefergebinde 3 werden gruppiert jeweils zu den Kommissionieraufträgen von der zumindest einen Kommissionierstation 22 unmittelbar zum Beladesystem 11 gefördert. Das Fördersystem 37 bildet im Nahbereich des Beladesystems 11 einen Pufferplatz 10 aus, an welchem die Liefergebinde 3 nacheinander bereitgestellt werden, um anschließend auf ein Transportgestell 12 geladen zu werden. Das Beladen des zumindest einen Transportgestelles 12 mit den Liefergebinden 3 erfolgt wiederum in einer vom Rechnersystem 2 ermittelten Beladungsordnung, wobei die Bedienperson 27 über das Ein- und Ausgabesystem 28 (optisches und/oder akustisches Bedienerführungssystem) Beladeinstruktionen erhält, insbesondere in welche Stellfächer 38 (Fig. 8) im Transportgestell 12 die Liefergebinde 3 abzustellen sind. Auch wenn das Beladesystem 11 gemäß den Fig. 2a, 2b in der Fig. 5 dargestellt ist, kann genauso gut das Beladesystem 11 gemäß den Fig. 3, 4 verwendet werden.

Das Beladen der Transportgestelle 12 mit den Liefergebinden 3 kann nach beiden Ausführungen (Fig. 2a, 2b; 5) auch durch einen Beladungsroboter automatisch und gemäß einer definierten Beladungsordnung erfolgen. In einem solchen Fall ist das elektronische Ein- und Ausgabesystem 28, 31, 32 bzw. das optische und/oder akustische Bedienerführungssystem nicht notwendig.

Denkbar ist auch eine Kombination einer manuellen und automatischen Beladung der Transportgestelle 12, wenn die beladenen Liefergebinde 3 ein hohes Gewicht aufweisen und es sich aus ergonomischen Gründen als zweckmäßiger erweist, der manuellen Beladung die automatische Beladung vorzuziehen.

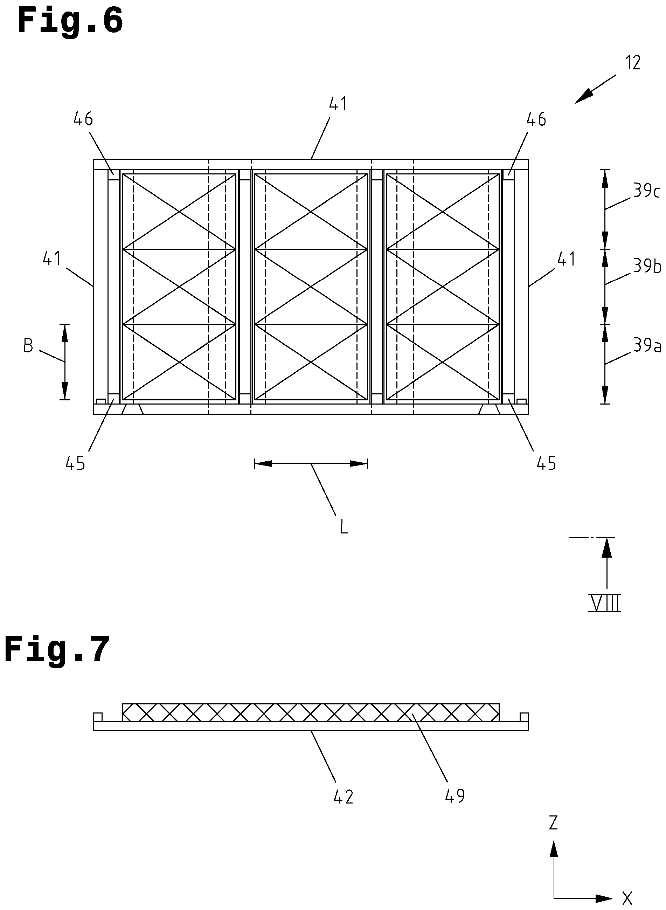

In den Fig. 6 bis 9 ist das Transportgestell 12 in unterschiedlichen Ansichten gezeigt. Das Transportgestell 12 ist im Wesentlichen ein (mobiles) Lagerregal, welches in übereinander angeordneten horizontalen Regalzeilen und nebeneinander angeordneten vertikalen Regalspalten Stellfächer 38 ausbildet. Diese Stellfächer 38 können eine Vielzahl von hintereinander angeordneten Stellplätze 39a, 39b, 39c ausbilden. Das Transportgestell 12 weist eine maximale Breite (x-Richtung) von 2100mm, eine maximale Tiefe (z-Richtung) von 1500mm und eine maximale Höhe (y-Richtung) von 2000mm auf. Bevorzugt sind maximal fünf Stellfächer 38 übereinander und maximal drei Stellfächer 38 nebeneinander vorgesehen und bilden die Stellfächer 38 jeweils maximal drei Stellplätze 39a, 39b, 39c aus. Sind die Liefergebinde 3 Behälter oder Kartons mit einer Länge (L) von maximal 700mm, einer Breite (B) von maximal 600mm und einer Höhe (H) von maximal 400mm, so kann das Transportgestell 12 mit 45 Liefergebinden 3 beladen werden.

Das Transportgestell 12 umfasst eine Bodenplatte 40, an diesem aufragende Wandteile 41, 42 und eine Deckplatte 43, wobei einer der Wandteile 42 zwischen einer Öffnungsstellung und einer Schließstellung verstellbar ist. In der Öffnungsstellung (Fig. 6, 8) sind die Liefergebinde 3 sämtlicher Stellfächer 38 zugänglich und in der Schließstellung (Fig. 9) sind die Liefergebinde 3 sämtlicher Stellfächer 38 lagegesichert. Wie gezeigt ist der Wandteil 42 als Deckel ausgebildet, welcher vom Transportgestell 12 entfernt werden kann. Bevorzugt werden so genannte "Schnellverschlüsse 44" verwendet, die ein rasches Öffnen und Schließen des Transportgestelles 12 ermöglichen. Nach einer anderen Ausführung kann der Wandteil 42 auch über eine Scharnieranordnung gelenkig mit dem Transportgestell 12 verbunden werden, wobei der Wandteil 42 eine zwischen der Öffnungsstellung und der Schließstellung schwenkbare Tür bildet. Auch kann der Wandteil 42 durch ein zwischen der Öffnungsstellung und der Schließstellung verstellbares Rollo oder eine zwischen der Öffnungsstellung und der Schließstellung verstellbare Schiebewand gebildet sein.

Das Transportgestell 12 umfasst im gezeigten Ausführungsbeispiel an einer Vorderseite vertikale (vordere) Steher 45 und an einer Rückseite vertikale (hintere) Steher 46, die über die Bodenplatte 40 und die Deckplatte 43 miteinander verbunden sind. Die Wandteile 41 können an den Stehern 45, 46 befestigt werden. Die Stellfächer 38 sind durch in regelmäßigen vertikalen und horizontalen Abständen angeordnete Winkelprofile 47 gebildet, welche sich jeweils zwischen den vorderen Stehern 45 und hinteren Stehern 46 erstrecken und an diesen befestigt sind. Die Winkelprofile 47 weisen einen L-förmigen Querschnitt auf. Anstatt der Winkelprofile 47 können auch Fachböden verwendet werden, welche sich zwischen den Wandteilen 41 erstrecken.

Somit bildet das Transportgestell 12 (in einer y-Richtung) in übereinander liegenden Stellebenen und (in einer x-Richtung) nebeneinander eine Vielzahl von Stellfächern 38 aus, welche sich (in einer z-Richtung) zwischen der Vorderseite und Rückseite des Transportgestelles 12 erstrecken. Diese Stellfächer können (in einer z-Richtung) mehr als einen Stellplatz, beispielweise drei Stellplätze 39a, 39b, 39c ausbilden.

Wie aus Fig. 9 zu entnehmen, ist eine Stellfachtiefe 48 durch die einander gegenüberliegenden Wandteile 41, 42 begrenzt und derart ausgelegt, dass die in einem Stellfach 38 befindlichen Liefergebinde 3 zwischen den Wandteilen 41, 42 nur begrenzt verrutschen können, wenn das Traggestell 12 transportiert wird. Dabei können die Liefergebinde 3 in den Stellfächern 38 gegen die Wandteile 41, 42 positioniert werden.

Wie oben beschrieben, ist der Wandteil 42 zwischen einer Öffnungsstellung und einer Schließstellung verstellbar, wobei in der Schließstellung der Wandteil 42 als Lagesicherungsmittel dient, um auf dem Transport des Traggestelles 12 ein Rutschbewegung der Liefergebinde 3 in den Stellfächern 30 zu begrenzen bzw. zu verhindern. Wie in den Fig. 6 und 9 ersichtlich, ist nur ein geringfügiger Spaltabstand zwischen den hinteren Liefergebinden 3 und dem Wandteil 41 bzw. vorderen Liefergebinden 3 und dem Wandteil 42. Dies erlaubt Maßabweichungen der Liefergebinde 3. Andererseits kann es auch vorgesehen werden, dass an der Innenseite an zumindest einem der Wandteile 41, 42, insbesondere des (verstellbaren) Wandteiles 42 ein elastisches Stützelement 49, beispielweise eine Schaumstoffplatte, angeordnet ist, welches auf die Liefergebinde 3 eine Andrückkraft erzeugt, wenn der Wandteil 42 in der Schließstellung positioniert ist. Dabei werden die Liefergebinde 3 gegeneinander und das hintere oder vordere Liefergebinde 3 gegen den Wandteil 41, 42 positioniert. In diesem Fall ist das elastische Stützelement 49 das Lagesicherungsmittel. Während nach dieser Ausführung das elastische Stützelement 49 mehreren Stellfächern 38 zugeordnet ist, ist es andererseits auch möglich, dass je Stellfach 38 ein elastisches Stützelement 50 vorgesehen ist. Möglich ist auch eine Ausführung, bei der die Winkelprofile 47 Formschlusselemente ausbilden, beispielweise können auf der dem Boden der Liefergebinde 3 zugewandten Stellfläche Erhebungen vorgesehen werden. Die Stellplätze 39a, 39b, 39c sind dann durch die Erhebungen voneinander getrennt, wobei die Erhebungen nur so hoch ausgebildet sind, dass die Bedienperson 27 die Liefergebinde 3 noch "mühelos" in die Stellfächer 38 einschieben kann. Die Formschlusselemente bilden dabei Lagesicherungsmittel.

Die Bodenplatte 40 umfasst Ausnehmungen 50, in welche Gabelzinken einer Übergabevorrichtung 35, insbesondere eines Handgabelhubwagens, Elektrohubwagens oder Gabelstaplers einfahren können, um das Transportgestell 12 vom Boden anzuheben und zu transportieren. In den Fig. sind die Ausnehmungen 50 für Zinken eines Gabelstaplers dargestellt. Alternativ können sich die Ausnehmungen 50 auch bis zur Bodenfläche erstrecken, wie in Fig. 8 in strichlierte Linien eingetragen.

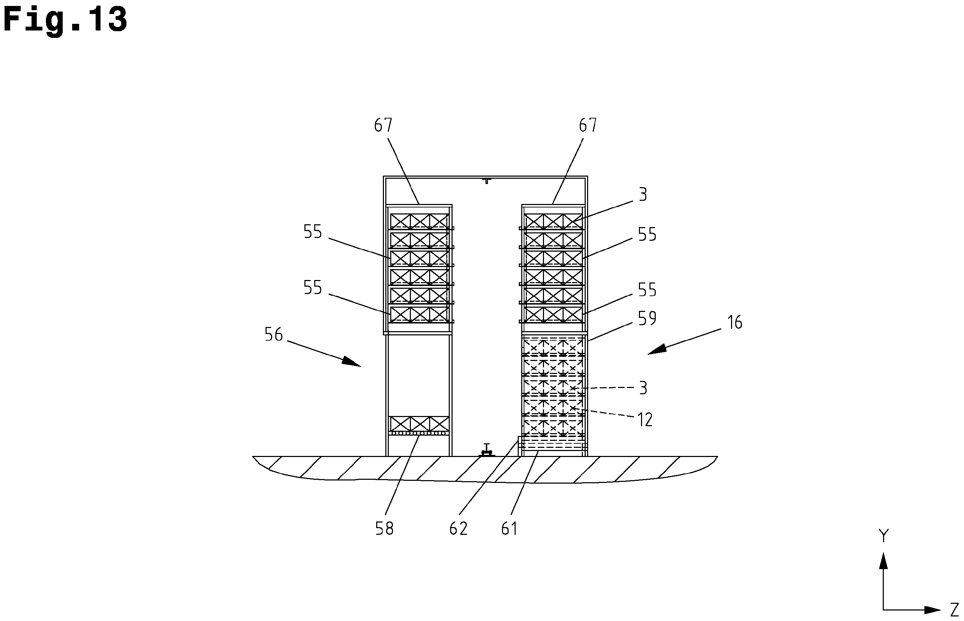

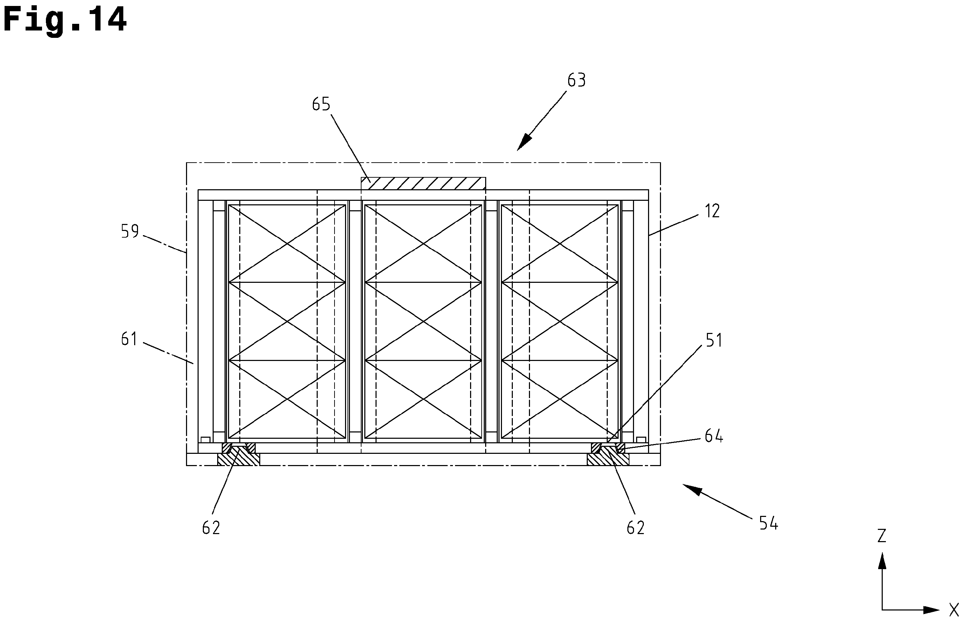

Wie aus den Fig. 6, 8 und 9 ersichtlich, ist das Transportgestell 12 mit einem Positionier- und Zentriermittel 51 ausgestattet, welches eine Positionierung und Zentrierung des Transportgestelles 12 relativ zum Unterbringungsabschnitt 59 im Lagerregal 67 im Pufferlager 53 (Fig. 10) ermöglicht, wenn das Transportgestell 12 an der Andockvorrichtung 54 (Fig. 11, 13) in einer Andockstellung bereitgestellt wird. In der Andockstellung ist das Transportgestell 12 in einer x-Richtung, y-Richtung und z-Richtung exakt positioniert. Zusätzlich kann das Transportgestell 12 in der Andockstellung über eine Feststellvorrichtung 63 (Fig. 14) lagefixiert werden. Nach gezeigter Ausführung sind zwei Positionier- und Zentriermittel 51 vorgesehen, welche bevorzugt in der Bodenplatte 40 angeordnet sind.

Das Positionier- und Zentriermittel 49 bildet nach gezeigter Ausführung geneigt aufeinander zulaufende Positionier- und Zentrierflächen 52 aus, welche die Positionierung des Transportgestelles 12 in der x-Richtung ermöglichen.

In den Fig. 10 bis 13 ist das Pufferlager 53 in unterschiedlichen Ansichten gezeigt. Das Pufferlager 53 umfasst das Übernahmesystem 15 für die mittels dem Transportfahrzeug 14 angelieferten Transportgestelle 12, das Bereitstellsystem 16 zum Bereitstellen von Transportgestellen 12 an einer Andockvorrichtung 54, das automatisiert betriebene Lagerbediengerät 17 zur Entnahme der Liefergebinde 3 aus dem Transportgestell 12 und Umlagerung zumindest einiger Liefergebinde 3 vom Transportgestell 12 auf Lagerfächer 55, das Lagersystem 16 mit den Lagerfächern 55 zur Zwischenlagerung der Liefergebinde 3, zumindest eine Ausgabestation 56 mit einer Eingabevorrichtung 57 und zumindest einem Andienungsplatz 58, an welchem die Waren in den Liefergebinden 3 bereitgestellt werden, wenn diese durch Eingabe eines Anforderungsbefehles an der Eingabevorrichtung 57 angefordert werden. Ebenso weist das Pufferlager 53 ein Steuerungssystem 69 für die Andockvorrichtung 54, das Lagerbediengerät 17, die Eingabevorrichtung 57 und den zumindest einen Andienungsplatz 58 auf. Dem Steuerungssystem 69 wird der Anforderungsbefehl übermittelt und kann das Lagerbediengerät 17 mit der Eingabe des Anforderungsbefehles von einem (Ein)Lagerbetrieb in einen direkten Auslagerbetrieb wechseln. Auch kann das Pufferlager 53 ein Rechnersystem 75 umfassen. Dieses ist mit dem Steuerungssystem 69 verbunden. Bevorzugt sind das Rechnersystem 2 des Versorgungslagers 1 und das Rechnersystem 75 des Pufferlagers 53 über eine Datenübertragungseinrichtung, insbesondere eine Datenleitung, wie ein öffentliches Kommunikationsnetz (Internet) oder ein vom Warenanbieter betriebenes Kommunikationsnetz (Intranet) miteinander verbunden.

Das Übernahmesystem 15 umfasst beispielweise eine Laderampe, an der das Transportfahrzeug 14 andockt und wo die Transportgestelle 12 abgeladen werden.

Das Bereitstellsystem 16 zum Bereitstellen von Transportgestellen 12 ist in Fig. 14 näher dargestellt, welches eine oder mehrere Andockvorrichtungen 54 umfasst. Die Andockvorrichtung 54 ist dabei in einem Unterbringungsabschnitt 59, welcher in einem Lagerregal 67 des Lagersystemes 16 vorgesehen ist, angeordnet. Die Andockvorrichtung 54 umfasst eine ortsfeste Aufstellfläche 61, auf welcher das Transportgestell 12 abgestellt werden kann, ein Positionier- und Zentriermittel 62 und eine Feststellvorrichtung 63. Das Positionier- und Zentriermittel 61 bildet zumindest eine geneigt verlaufende Positionier- und Zentrierfläche 64 aus. Nach gezeigter Ausführung sind zwei Positionier- und Zentriermittel 62 vorgesehen, welche mit den Positionier- und Zentriermittel 51 zusammenwirken. Die Feststellvorrichtung 63 ist beispielweise ein federbelasteter Anschlag 65, welcher über einen nicht dargestellten Stellantrieb (Pneumatikantrieb, Hydraulikantrieb und dgl.) in Richtung auf das an der Aufstellfläche 61 abgestellte Transportgestell 12 zustellbar ist.

Fig. 14 zeigt das Transportgestell 12, welches über die Positionier- und Zentriermittel 51, 61 relativ zum Unterbringungsabschnitt 59 bzw. relativ gegenüber dem Lagerregal 67 zumindest in der x-Richtung positioniert und über die Feststellvorrichtung 63 in der z-Richtung positioniert gehalten wird. Die Positionierung in der y-Richtung erfolgt über die Aufstellfläche 61. Ist das Transportgestell 12 in der x-, y- und z-Richtung positioniert, befindet sich das Transportgestell 12 in der Andockstellung.

Mit anderen Worten ist das Transportgestell 12 in der Andockstellung derart positioniert und gegenüber den Lagerfächern 55 ausgerichtet, dass die Stellfächer 38 des Transportgestelles 12 exakt im Raster der Lagerfächer 55 des Lagerregales 67 angeordnet sind und im Zugriffsbereich des Lagerbediengerätes 17 liegen. Das Lagerbediengerät 17 kann nunmehr auf die Liefergebinde 3 an den Stellfächern 38 zugreifen.

Das Lagersystem 18 ist in einem Gebäude 66 angeordnet und umfasst ortsfest aufgestellte Lagerregale 67 und zumindest ein Lagerbediengerät 17, wobei das Lagerbediengerät 17 die Liefergebinde 3, welche die Waren 4 der Kundenbestellungen enthalten, zwischen den Transportgestellen 12 und den Lagerregalen 67 oder den Transportgestellen 12 und den Andienungsplätzen 58 transportiert.

Das ortsfest aufgestellte erste Lagerregal 67 (rechtes Lagerregal in Fig. 13) und ortsfest aufgestellte zweite Lagerregal 67 (linkes Lagerregal in Fig. 13) bilden in übereinander liegenden Regalebenen jeweils nebeneinander eine Vielzahl von Lagerfächern 55 aus, welche in einer Tiefenrichtung (z-Richtung) einen einzigen oder hintereinander mehr als einen Lagerplatz ausbilden, auf welchem jeweils ein Liefergebinde 3 abgestellt wird. Die Lagerfächer 55 sind durch in regelmäßigen vertikalen und horizontalen Abständen angeordnete Winkelprofile gebildet. Umfasst das Transportgestell 12 anstatt der Winkelprofile 47 Fachböden, so werden auch die Lagerregale 67 anstatt der Winkelprofile mit Fachböden ausgestattet. Demnach verwendet man sowohl für das Transportgestell 12 als auch für das Lagersystem 18 dieselbe Lagerungstechnik.

Das erste Lagerregal 67 (rechtes Lagerregal in Fig. 13) umfasst im unteren Höhenbereich die Unterbringungsabschnitte 59, in welchen jeweils ein Transportgestell 12 auswechselbar positioniert werden kann, und darüber liegend in einem oberen Höhenbereich die Lagerfächer 55.

Das erste Lagerregal 67 kann auch nur einen Unterbringungsabschnitt 59 aufweisen. Das zweite Lagerregal 67 (linkes Lagerregal in Fig. 13) umfasst im unteren Höhenbereich die Ausgabestationen 56, in welchen jeweils zumindest ein Andienungsplatz 58 angeordnet ist, und darüber liegend in einem oberen Höhenbereich die Lagerfächer 55. Das zweite Lagerregal 67 kann auch nur eine Ausgabestation 56 aufweisen.

Das gezeigte Lagerbediengerät 17 ist ein rechnergesteuertes Regalförderfahrzeug, welches zwischen benachbarten Lagerregalen 67 in einer Regalgasse entlang von Schienen verfahrbar ist. Das Lagerbediengerät 17 weist einen Vertikalmast, eine am Vertikalmast heb- und senkbar gelagerte Plattform und eine schematisch angedeutete Lastaufnahmevorrichtung 76 auf, mittels welcher die Liefergebinde 3 manipuliert werden können.

Möglich ist auch ein Lagersystem 18, wie es beispielweise aus der WO 2013/090970 A2 bekannt ist.

Die in den Fig. 10 bis 13 gezeigte Ausgabestation 56 weist die Eingabevorrichtung 57 und zwei Andienungsplätze 58 auf. Die Eingabevorrichtung 57 ist beispielweise ein Touchscreen, über welchen ein Anforderungsbefehl eingegeben werden kann, wenn der Warenempfänger (Kunde) 68 an der Ausgabestation 56 die Ware 4 abholen möchte. Die Eingabevorrichtung 57 kann alternativ eine Tastatur sein. Auch ist eine Spracheingabe möglich. Die Eingabevorrichtung 57 ist mit einem elektronischen Steuerungssystem 69 verbunden, welche ihrerseits die Fahrbefehle für das Lagerbediengerät 17 berechnet. Die Andienungsplätze 58 sind jeweils auf einer Fördertechnik, beispielweise Rollenförderer, Gurtförderer und dgl. ausgebildet, wobei auf jeder Fördertechnik mehrere Liefergebinde 3 aufgenommen werden können. Da eine durchschnittliche Kundenbestellung vier bis sechs Liefergebinde umfasst, können je Fördertechnik bis zu drei Liefergebinde 3 aufgenommen werden. Die Andienungsplätze 58 sind über eine von einer verriegelten Schließstellung in eine entriegelte Öffnungsstellung bewegbare Zugangsschleuse 71 zugänglich. Die Zugangsschleuse 71 entriegelt bzw. öffnet erst nach Eingabe des Anforderungsbefehles. Die Zugangsschleuse 71 wird hierzu von einem Stellantrieb (nicht dargestellt), beispielweise einen Pneumatikantrieb, Hydraulikantrieb und dgl., zwischen der Schließstellung und Öffnungsstellung betätigt. Der Stellantrieb ist mit dem Steuerungssystem 69 verbunden, das seinerseits den Stellantrieb (nicht dargestellt) ansteuert. Wurde die Zugangsschleuse 71 in die Öffnungsstellung betätigt, so kann der Warenempfänger (Kunde) 68 die Ware 4 aus den Liefergebinden 3 vom Andienungsplatz 58 entnehmen und in den PKW 72 (Personenkraftwagen) einladen.

Im nachfolgenden wird das Verfahren zur Auslieferung von Waren 4 in Liefergebinden 3 beschrieben.

Die Auslieferung von Waren 4 wird durch eine Bestellung über Telefon oder Internet ausgelöst. Die Kundenbestellung wird im Versorgunglager 1 vom Rechnersystem 2 elektronisch erfasst, welche eine oder mehrere Waren 4 umfassen kann. Basierend auf dieser Kundenbestellung wird vom Rechnersystem 2 zumindest ein Kommissionierauftrag erfasst. Der Kommissionierauftrag umfasst ein oder mehrere Liefergebinde 3, welche mit der bestellten Ware 4 beladen werden. Wie oben beschrieben, kann das Kommissionierten nach dem "W are zum Mann" oder "Mann zu Ware" Kommissionierprinzip erfolgen.

Wurden die Liefergebinde 3 mit der bestellten Ware 4 befüllt, erfolgt das Beladen der Transportgestelle 12. Dabei erweist es sich von Vorteil, wenn das Beladen nicht "chaotisch", sondern nach einer vom elektronischen Rechnersystem 2 ermittelten Beladungsordnung erfolgt. Erfindungsgemäß wird vom Rechnersystem 2 für jedes Liefergebinde 3 zu jedem Kommissionierauftrag ein Stellfach 38 im Transportgestell 12 ermittelt. Das Rechnersystem 2 weist hierzu ein Softwareprogramm zur Berechnung der Beladungsordnung auf.

Die Beladungsordnung berücksichtigt dabei auch, aufweichen Stellplatz 39a, 39b, 39c das Liefergebinde 3 innerhalb eines Stellfaches 38 abzustellen ist. Dies ist insbesondere dann von Vorteil, wenn eine erste Kundenbestellung (bzw. erster Kommissionierauftrag) weniger Liefergebinde 3 umfasst, als ein Stellfach 38 Stellplätze 39a, 39b, 39c ausbildet. Kann ein Stellfach 38 auf drei Stellplätzen 39a, 39b, 39c drei Liefergebinde 3 aufnehmen und umfasst die Kundenbestellung zwei Liefergebinde 3, so werden die zwei Liefergebinde 3 auf die hinteren Stellplätze 39b, 39c geladen. Wird am Rechnersystem 2 eine zweite Kundenbestellung (bzw. zweiter Kommissionierauftrag) erfasst, so kann ein Liefergebinde 3 dieser Bestellung in dasselbe Stellfach 38 geladen werden, wo noch der vordere Stellplatz 39a frei ist. Mit anderen Worten, kann das Rechnersystem 2 bei der Ermittlung der Beladungsordnung innerhalb eines Stellfaches 38 eine Beladezone 73.1 (Fig. 9) definieren.

Andererseits kann eine erste Kundenbestellung (bzw. erster Kommissionierauftrag) mehr Liefergebinde 3 umfassen, als ein Stellfach 38 Stellplätze 39a, 39b, 39c ausbildet. Kann ein Stellfach 38 auf drei Stellplätzen 39a, 39b, 39c drei Liefergebinde 3 aufnehmen und umfasst die Kundenbestellung fünf Liefergebinde 3, so werden drei Liefergebinde 3 in ein erstes Stellfach 38 und zwei Liefergebinde 3 in ein zweites Stellfach 38 geladen. Die Stellfächer 38 für die Liefergebinde 3 der ersten Kundenbestellung (bzw. des ersten Kommissionierauftrages) liegen dabei bevorzugt unmittelbar nebeneinander. Die Beladungsordnung kann daher eine Beladezone 73 über mehrere Stellfächer 38 definieren. Diese Beladezone ist der ersten Kundenbestellung (bzw. dem ersten Kommissionierauftrag) zugeteilt.

Dies ist insbesondere auch von Vorteil, wenn mehrere Kundenbestellungen (bzw. Kommissionieraufträge) vorliegen, welche jeweils sämtliche Stellplätze 39a, 39b, 39c eines oder mehrerer Stellfächer 38 mit den Liefergebinden 3 belegen. Beispielweise wurden am Rechnersystem 2 drei Kundenbestellungen (bzw. Kommissionieraufträge) erfasst, welche jeweils sechs Liefergebinde 3 umfassen. Sind je Stellfach 38 drei Stellplätze 39a, 39b, 39c vorhanden, so werden vom Rechnersystem 2 bei der Berechnung der Beladungsordnung drei Beladezonen 73.2, 73.3, 73.4 ermittelt. Wie in der Fig. 8 schematisch eingetragen, werden in der ersten Beladezone 73.2, welche zwei unmittelbar nebeneinander liegende Stellfächer 38 umfasst, die Liefergebinde 3 der ersten Kundenbestellung geladen, in der zweiten Beladezone 73.3, welche zwei unmittelbar nebeneinander liegende Stellfächer 38 umfasst, die Liefergebinde 3 der zweiten Kundenbestellung geladen und in der dritten Beladezone 73.4, welche zwei unmittelbar nebeneinander liegende Stellfächer 38 umfasst, die Liefergebinde 3 der dritten Kundenbestellung geladen. Die Beladezonen 73.2, 73.3, 73.4 können dabei nebeneinander liegen oder auf das Transportgestell 12 verteilt werden.

Wird das Transportgestell 12 von der Bedienperson 27 beladen, so werden dieser am Bedienerführungssystem, insbesondere dem optischen und/oder akustischen Ausgabesystem 28, 31 (Fig. 2b; Fig. 3) basierend auf der vorherigen Ermittlung der Beladungsordnung durch das Rechnersystem 2 Beladeinstruktionen ausgegeben, insbesondere in welche Stellfächer 38 und/oder Stellplätze 39a, 39b, 39c (Fig. 8) im Transportgestell 12 die Liefergebinde 3 abzustellen sind. Bei der automatischen Beladung des Transportgestelles 12 ist ein solches Ausgabesystem 28, 31 nicht zwingenderweise erforderlich.

Vor dem (manuellen / automatischen) Beladen des Transportgestelles 12 werden die Liefergebinde 3 identifiziert, indem über die erste Erfassungseinrichtung 25 (Leseeinrichtung) Daten vom Datenträger 33 (wie aus Gründen der besseren Übersicht nur in Fig. 8 ein einziges Mal dargestellt) beispielsweise ein Identifikationscode gelesen und vom Rechnersystem 2 erfasst.

Der Datenträger 33 ist ein eindimensionaler / zweidimensionaler Barcode, oder ein QR-Code (Quick Response Code), oder eine RFID-Etikette (Radio Frequency Identification Device). Bei der manuellen Beladung ist die erste Erfassungseinrichtung 25 eine mobile Lesevorrichtung, beispielweise ein Handscanner, während bei der automatischen Beladung die erste Erfassungseinrichtung 25 eine stationäre Lesevorrichtung ist, welche im Bereich des Pufferplatzes 9, 10 angeordnet ist. Die Erfassungseinrichtung 25 kann auch ein RFID-Lesegerät sein.

Erfindungsgemäß wird vor dem Beladen das Transportgestell 12 identifiziert, indem über die zweite Erfassungseinrichtung 26 (Leseeinrichtung) Daten vom Datenträger 34 (Fig. 8) beispielsweise ein Identifikationscode gelesen und vom Rechnersystem 2 erfasst. Der Datenträger 34 ist ein eindimensionaler / zweidimensionaler Barcode, oder ein QR-Code (Quick Response Code), oder eine RFID-Etikette (Radio Frequency Identification Device). Die zweite Erfassungseinrichtung 25 eine stationäre Lesevorrichtung (Barcode-Lesegerät oder RFID-Lesegerät) ist, welche im Bereich der Bereitstellfläche 24 angeordnet ist.

Somit ist eine eindeutige Zuteilung der (identifizierten) Liefergebinde 3 zu einem Transportgestell 12 möglich, wobei das Rechnersystem 2 vorgibt, welche Liefergebinde 3 in welches Transportgestell 12 zu laden sind, wenn im Beladesystem 11 gleichzeitig mehrere Transportgestelle 12 bereitgestellt werden.

Wie bereits oben beschrieben, kann auch nur eine Erfassungseinrichtung verwendet werden, mittels welcher zum Einen der Datenträger 33 am Liefergebinde 3 und zum Anderen der Datenträger 34 am Transportgestell 12 gelesen wird.

Außerdem kann vom Rechnersystem 2, insbesondere einem elektronischen Auswertemodul, ausgewertet werden bzw. ist diesem bekannt, auf welchem Transportgestell 12 welche Liefergebinde 3 zu den jeweiligen Kommissionieraufträgen und in welchem Stellfach 38 die Liefergebinde 3 untergebracht sind. Gegebenenfalls kann auch ausgewertet werden, welche Liefergebinde 3 auf welchen Stellplätzen 39a, 39b, 39c zu den jeweiligen Kommissionieraufträgen abgestellt sind.

Es können nunmehr auch dem Rechnersystem 75 eines ausgewählten Pufferlagers 53 (sofern mehrere Pufferlager 53 vorhanden sind) Daten über die Kundenbestellung / des Kommissionierauftrages und / oder Daten über die anzuliefernden Transportgestelle 12, wie beispielsweise die Lagerpositionen der Liefergebinde 3 in den Stellfächern 38 und/oder Lagerpositionen der Liefergebinde 3 auf den Stellplätzen 39a, 39b, 39c avisiert werden. Somit ist dem Rechnersystem 75 bekannt, wo zu den jeweiligen Kommissionieraufträgen die Liefergebinde 3 im Transportgestell 12 lagern. Hierzu werden die Daten vom Rechnersystem 2 an das Rechnersystem 75 elektronisch übermittelt oder es können vom Rechnersystem 75 die Daten aus dem Rechnersystem 2 abgerufen werden. Alternativ können diese Daten auch auf dem Datenträger 34 (vom Transportgestell 12) gespeichert werden, welche über die Erfassungseinrichtung 74 (Leseeinrichtung) ausgelesen werden können. Anschließend werden diese Daten an das Rechnersystem 75 übermittelt.

Sobald das Transportgestell 12 mit den Liefergebinden 3 vollständig beladen wurde, wird dieses wie oben beschrieben mittels des Transportsystems 14 vom Versorgungslager 1 zum Pufferlager 53 transportiert. Zuvor wird vom Rechnersystem 2 basierend auf der Kundenbestellung (Wohnadresse des Warenempfängers oder einer Lieferadresse) bestimmt, zu welchem Pufferlager 53 das Transportgestell 12 angeliefert werden muss, sofern eine Vielzahl von Pufferlagern 53 vorhanden ist. Erfindungsgemäß wird das Transportgestell 12 vom Transportsystem 14 auf das Übernahmesystem 15 übergeben. Hier wird von einer Erfassungseinrichtung 74 das Transportgestell 12 identifiziert, indem über die Erfassungseinrichtung 74 Daten vom Datenträger 34 (Fig. 8) beispielsweise ein Identifikationscode oder ein Identifikationscode und Daten über die Beladungsordnung gelesen und vom Rechnersystem 75 erfasst. Die Erfassungseinrichtung 25 ist eine mobile Lesevorrichtung oder eine stationäre Lesevorrichtung, welche am Übernahmesystem 15 angeordnet ist, beispielweise ein Barcode-Lesegerät oder RFID-Lesegerät. Die Erfassungseinrichtung 74 ist mit dem Steuerungssystem 69 verbunden. Das Steuerungssystem 69 ist wiederum mit dem Rechnersystem 75 verbunden.

Beispielweise wird das Transportgestell 12 vom Transportfahrzeug 14 abgeladen und danach über die Erfassungseinrichtung 74 identifiziert. Mit der Identifikation des Transportgestelles 12 kann auch auf die avisierten Daten zurückgegriffen und das Lagerbediengerät 17 entsprechend angesteuert werden.

Am Bereitstellsystem 16 wird nun das Transportgestell 12 zu einem von gegebenenfalls mehreren Unterbringungsabschnitten 59 transportiert. Dies kann durch einen Handgabelhubwagen, Elektrohubwagen und dgl. (in Fig. 12 nicht eingetragen) erfolgen. Andererseits kann auch am Übernahmesystem 15 ein Rollenteppich vorgesehen werden, auf welchem das Transportgestell 12 zum und in den Unterbringungsabschnitten 59 geschoben werden kann. Zudem wird der Wandteil 42 in eine Öffnungsstellung bewegt, insbesondere vom Transportgestell 12 entfernt. In den Fig. 11 bis 13 sind beispielweise zwei beladene Transportgestelle 12' und ein bereits entladenes Transportgestell 12" in der Andockstellung gezeigt, in welcher sich der Wandteil 42 in der Öffnungsstellung befindet, insbesondere der Wandteil 42 entfernt wurde. Somit kann das Lagerbediengerät 17, insbesondere die Lastaufnahmevorrichtung 76 auf die Stellfächer 38 zugreifen. In den Fig. 11 und 12 ist ersichtlich, wie das Lagerbediengerät 17, insbesondere die Lastaufnahmevorrichtung 76 aus einem (obersten) Stellfach 38 des Transportgestelles 12' Liefergebinde 3 entnommen hat. Diese Liefergebinde 3 werden beispielweise der (mittleren) Abholstation 56 zugeführt, wo gerade der Warenempfänger 68 seine Ware 4 angefordert hat, und auf dem Andienungsplatz 58 abgestellt.

Der linke Unterbringungsabschnitt 59 ist frei. Das leere Transportgestell 12 wurde also entfernt. Im Unterbringungsabschnitt 59 befindet sich die Andockvorrichtung 54 (Fig. 12, 14), wo das Transportgestell 12 in einer Andockstellung bereitgestellt wird. Die Andockstellung kann über eine nicht dargestellte Sensorik überwacht werden. Die Stellfächer 38 befinden sich in der Andockstellung im Zugriffsbereich des Lagerbediengerätes 17.

Das Lagerbediengerät 17 kann nun mit der Entnahme der Liefergebinde 3 aus dem Transportgestell 12 beginnen und die Liefergebinde 3 entweder in das Lagersystem 18 oder auf das Ausgabesystem 56 umlagern.

### Umlagerung der Liefergebinde in das Lagersystem

Liegt aktuell kein Anforderungsbefehl vor und wurde eine Kundenbestellung noch nicht an der Ausgabestation 56 angefordert, kann das Lagerbediengerät 17 (Fig. 12) die Liefergebinde 3 vom Transportgestell 12 entnehmen und in das Lagersystem 18 umlagern. Dabei kann das Lagerbediengerät 17 über die Lastaufnahmevorrichtung 76 aus einem Stellfach 38 alle zu einem Kommissionierauftrag benötigten Liefergebinde 3 entnehmen. Eine solche Lastaufnahmevorrichtung 76 ist beispielweise aus der EP 1 697 251 B1 bekannt. Wie oben beschrieben, können somit die im Stellfach 38 auf den Stellplätzen 39a, 39b, 39c hintereinander abgestellten Liefergebinde von der Lastaufnahmevorrichtung 76 übernommen und gemeinsam zu einem Lagerfach 55 transportiert und in dieses eingelagert werden.

Erst wenn zu einem späteren Zeitpunkt als das Transportgestell 12 an der Andockvorrichtung 54 bereitgestellt wird, ein Anforderungsbefehl vorliegt und die Kundenbestellung an der Ausgabestation 56 angefordert wurde, kann das Lagerbediengerät 17 (Fig. 12) die Liefergebinde 3 aus dem Lagerfach 55 entnehmen und auf das Ausgabesystem 56 umlagern. Dabei kann das Lagerbediengerät 17 über die Lastaufnahmevorrichtung 76 aus einem Lagerfach 38 alle zu einem Kommissionierauftrag benötigten Liefergebinde 3 entnehmen und gemeinsam zum Ausgabesystem 56 transportieren.

### Umlagerung der Liefergebinde auf das Ausgabesystem

Liegt aktuell ein Anforderungsbefehl vor und wurde eine Kundenbestellung an der Ausgabestation 56 angefordert, kann das Lagerbediengerät 17 (Fig. 12) die Liefergebinde 3 direkt vom Transportgestell 12 entnehmen und auf das Ausgabesystem 56 umlagern, wie in Fig. 12 dargestellt. Mit dem Anforderungsbefehl wird das Lagerbediengerät 17 vom Steuerungssystem 69 aus dem (Ein)Lagerbetrieb in den direkten Auslagerbetrieb geschaltet. Dabei kann das Lagerbediengerät 17 über die Lastaufnahmevorrichtung 76 aus einem Stellfach 38 alle zu einem Kommissionierauftrag benötigten Liefergebinde 3 entnehmen. Es können die im Stellfach 38 auf den Stellplätzen 39a, 39b, 39c hintereinander abgestellten Liefergebinde 3 von der Lastaufnahmevorrichtung 76 übernommen und gemeinsam zu Ausgabestation 56 (nach Fig. 12 die linke Ausgabestation 56 mit leeren Andienungsplatz 58) transportiert werden.

Somit kann der Schritt der Umlagerung auf das Lagersystem 18 entfallen und es können so genannte "Eilaufträge" sehr rasch abgewickelt werden.

Nach beiden Ausführungen kann der Anforderungsbefehl durch eine Eingabe an der Eingabevorrichtung 57 ausgelöst werden. Dementsprechend wird das Lagerbediengerät 17 vom Steuerungssystem 69 angesteuert. Beispielweise kann die Eingabe das Erfassen eines Kennwortes oder Bestellnummer und dgl. enthalten.

Schlussendlich kann der Warenempfänger 68 am Ausgabesystem 56 seine bestellte Ware 4 abholen. Die Liefergebinde 3, welche vom Lagerbediengerät 17 zum Ausgabesystem 56 transportiert werden, werden auf einem oder mehreren Andienungsplätzen 58 bereitgestellt.

Bevorzugt ist die Ware 4 in zumindest einem Sack eingefüllt, welcher im Liefergebinde 3 abgestellt ist, sodass der Warenempfänger 68 nur den Sack aus dem Liefergebinde 3 entnehmen muss. Die leeren Liefergebinde 3 werden anschließend wiederum durch das Lagerbediengerät 17 vom Ausgabesystem 55 abgeholt und auf ein leeres / teilentleertes Transportgestell 12 geladen (siehe Fig. 12 Transportgestell 12"). Es erfolgt somit eine Rücklagerung entleerter Liefergebinde 3.

Anschließend werden die Transportgestelle 12 mit den leeren Liefergebinde 3 vom Pufferlager 53 zum Versorgungslager 1 transportiert, wo diese neuerlich verwendet werden können.

Die Ausführungsbeispiele zeigen mögliche Ausführungsvarianten des Systems zur Auslieferung von Waren, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vor allem können die einzelnen in den Fig. 1 bis 14 gezeigten Ausführungen den Gegenstand von eigenständigen, erfindungsgemäßen Lösungen bilden.

Der Ordnung halber sei abschließend darauf hingewiesen, dass zum besseren Verständnis des Aufbaus des Transportfahrzeuges bzw. der Führungseinheit dieses bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Versorgungslager | 31 | Anzeige |
| 2 | Rechnersystem | 32 | Quittiertaste |
| 3 | Liefergebinde | 33 | Datenträger Liefergebinde |
| 4 | Ware | 34 | Datenträger Transportgestell |
| 5 | Lagersystem | 35 | Übergabevorrichtung |
| 6 | Kommissioniersystem | 36 | Bedienperson |
| 7 | Kommissionierperson | 37 | Fördersystem |
| 8 | Steuerungssystem | 38 | Stellfach |
| 9 | Pufferplatz | 39 | Stellplatz |
| 10 | Pufferplatz | 40 | Bodenplatte |
| 11 | Beladesystem | 41 | Wandteil |
| 12 | Transportgestell | 42 | Wandteil |
| 13 | Übergabesystem | 43 | Deckplatte |
| 14 | Transportsystem | 44 | Schnellverschluss |
| 15 | Übernahmesystem | 45 | vordere Steher |
| 16 | Bereitstellsystem | 46 | hintere Steher |
| 17 | Lagerbediengerät | 47 | Winkelprofil |
| 18 | Lagersystem | 48 | Stellfachtiefe |
| 19 | Lagerregal | 49 | Stützelement |
| 20 | Regalförderfahrzeug | 50 | Ausnehmung |
| 21 | Fördertechnik | 51 | Positionier- und Zentriermittel |
| 22 | Kommissionierstation | 52 | Positionier- und Zentrierfläche |
| 23 | Konsolidierungspuffer | 53 | Pufferlager |
| 24 | Bereitstellfläche | 54 | Andockvorrichtung |
| 25 | Erfassungseinrichtung | 55 | Lagerfach |
| 26 | Erfassungseinrichtung | 56 | Ausgabestation |
| 27 | Bedienperson | 57 | Eingabevorrichtung |
| 28 | Ein- und/oder Ausgabesystem | 58 | Andienungsplatz |
| 29 | Beladerahmen | 59 | Unterbringungsabschnitt |
| 30 | Beladeöffnung | 60 | Pufferplatz |
| 61 | Aufstellfläche | | |
| 62 | Positionier- und Zentriermittel | | |
| 63 | Feststellvorrichtung | | |
| 64 | Positionier- und Zentrierfläche | | |
| 65 | Anschlag | | |
| 66 | Gebäude | | |
| 67 | Lagerregal | | |
| 68 | Warenempfänger | | |
| 69 | Steuerungssystem | | |
| 70 | | | |
| 71 | Zugangsschleuse | | |
| 72 | PKW | | |
| 73 | Beladezone | | |
| 74 | Erfassungseinrichtung | | |
| 75 | Rechnersystem | | |
| 76 | Lastaufnahmevorrichtung | | |

## Patentansprüche

1. Verfahren zur Auslieferung von Waren (4) in Liefergebinden (3), umfassend die Schritte
i) Bereitstellen der Waren (4),
ii) Zusammenstellung der Waren (4) gemäß Kommissionieraufträgen in Liefergebinde (3),
iii) Bereitstellen zumindest eines Transportgestelles (12), welches mit in übereinander angeordneten horizontalen Regalzeilen und nebeneinander angeordneten vertikalen Regalspalten ausgebildeten Stellfächern (38) ausgebildet und auf welchem ein Datenträger (34) angebracht ist,
iv) Identifizierung des zumindest einen Transportgestelles (12) mittels einer Erfassungseinrichtung (25, 26) durch Lesen des Datenträgers (34) und Erfassen von Daten an einem ersten Rechnersystem (2),
v) Beladen des zumindest einen Transportgestelles (12) mit den Liefergebinden (3) für einen oder mehrere Kommissionieraufträge,
vi) Übergabe des zumindest einen Transportgestelles (12) auf ein Transportsystem (14), insbesondere ein Transportfahrzeug,
vii) Transport des zumindest einen Transportgestelles (12) mittels des Transportsystems (14) von einem Versorgungslager (1), in welchem die Schritte i) bis vi) durchgeführt werden, zu einem Pufferlager (53),
viii) Bereitstellen des zumindest einen Transportgestelles (12) im Pufferlager (53) an einer Andockvorrichtung (54),
ix) Entnahme der Liefergebinde (3) aus dem Transportgestell (12) mittels eines automatisiert betriebenen Lagerbediengerätes (17),
x) Umlagerung zumindest einiger Liefergebinde (3) vom Transportgestell (12) auf Lagerfächer (55) im Pufferlager (53),
xi) Transport des zumindest einen Liefergebindes (3) für einen Kommissionierauftrag zu einer Ausgabestation (56) im Pufferlager (53), an welcher die Waren (4) in den Liefergebinden (3) auf zumindest einem Andienungsplatz (58) zur Abholung bereitgestellt werden, wenn diese durch Eingabe eines Anforderungsbefehles an der Ausgabestation (56) angefordert werden,
**gekennzeichnet durch**
Ermittlung einer Beladungsordnung für die Liefergebinde (3) zu Kommissionieraufträgen durch das erste Rechnersystem (2) vor Schritt v), mit welcher die Lagerpositionen der Liefergebinde (3) in den Stellfächern (38) und/oder Lagerpositionen der Liefergebinde (3) auf Stellplätzen (39a, 39b, 39c) in den Stellfächern (38) festgelegt sind, und
Beladen des zumindest einen Transportgestelles (12) mit den Liefergebinden (3) im Schritt v) in der vom ersten Rechnersystem (2) ermittelten Beladungsordnung auf die in übereinander angeordneten horizontalen Regalzeilen und/oder nebeneinander angeordneten vertikalen Regalspalten ausgebildeten Stellfächer (38), und
Übergabe des zumindest einen Transportgestelles (12) nach Schritt vii) vom Transportsystem (14) an ein Übernahmesystem (15) im Pufferlager (53) und Identifizierung des zumindest einen Transportgestelles (12) mittels einer am Übernahmesystem (15) vorgesehenen Erfassungseinrichtung (74) durch Lesen des Datenträgers (34) und Erfassen von Daten an einem zweiten Rechnersystem (75) im Pufferlager (53), und
Bereitstellung von Daten über die Beladungsordnung am zweiten Rechnersystem (75), nachdem das zumindest eine Transportgestell (12) mit den Liefergebinden (3) im Versorgungslager (1) beladen wurde, und
Bereitstellung des zumindest einen Transportgestelles (12) an der Andockvorrichtung (54) im Pufferlager (53) derart, dass die in den übereinander angeordneten horizontalen Regalzeilen und nebeneinander angeordneten vertikalen Regalspalten ausgebildeten Stellfächer (38) im Zugriffsbereich des Lagerbediengerätes (17) liegen und das Lagerbediengerät (17) auf die Liefergebinde (3) an diesen Stellfächern (38) zugreifen kann, und Umlagerung der Liefergebinde (3) durch das Lagerbediengerät (17) während der Bereitstellung des Transportgestelles (12) an der Andockvorrichtung (54) von den Stellfächern (38) entweder auf die Lagerfächer (55) im Pufferlager (53), wenn diese noch nicht an der Ausgabestation (56) angefordert wurden, oder auf den Andienungsplatz (58), wenn diese an der Ausgabestation (56) angefordert wurden.

2. Verfahren nach Anspruch 1, **dadurch gekennzeichnet, dass** das Transportgestell (12) in einem Stellfach (38) einen einzigen Stellplatz (39a), auf welchem das Liefergebinde (3) abgestellt wird, oder eine Vielzahl von hintereinander angeordneten Stellplätzen (39a, 39b, 39c) aufweist, auf welchen eine Mehrzahl an Liefergebinden (3) abgestellt werden.

3. Verfahren nach Anspruch 1, **dadurch gekennzeichnet, dass** das Transportgestell (12) übereinander maximal fünf Stellfächer (38) und nebeneinander maximal drei Stellfächer (38) aufweist und die Stellfächer (38) jeweils maximal drei Stellplätze (39a, 39b, 39c) ausbilden, sodass ein Transportgestell (12) mit maximal 45 Liefergebinde (3) beladen wird, wobei das Liefergebinde (3) eine Länge (L) von maximal 700mm, eine Breite (B) von maximal 600mm und Höhe (H) von maximal 400mm ausbildet.

4. Verfahren nach einem der Ansprüche 1 bis 3, **dadurch gekennzeichnet, dass** die Liefergebinde (3) im Stellfach (38) gegen zumindest ein Lagesicherungsmittel (41, 42) positioniert werden, wenn auf dem Transport des Traggestelles (12) die Liefergebinde (3) in den Stellfächern (38) verrutschen, oder von zumindest einem Lagesicherungsmittel (49) fixierend gehalten werden, um eine Rutschbewegung der Liefergebinde (3) in den Stellfächern (38) zu verhindern.

5. Verfahren nach einem der Ansprüche 1 bis 4, **dadurch gekennzeichnet, dass** die Liefergebinde (3) nach dem Kommissionieren der Ware (4) im Schritt ii) zu einem Beladesystem (11) transportiert werden, wo auch die Transportgestelle (12) bereitgestellt und mit den Liefergebinden (3) beladen werden, wobei auch die Liefergebinde (3) vor dem Beladen der Transportgestelle (12) mittels einer Erfassungseinrichtung (25, 26) identifiziert werden, und dass vom Rechnersystem (2) eine Zuteilung der Liefergebinde (3) auf das jeweilige Transportgestell (12) und die jeweiligen Stellfächer (38) im Transportgestell (12) erfolgt.

6. Verfahren nach einem der Ansprüche 1 bis 5, **dadurch gekennzeichnet, dass** das Rechnersystem (2) aus einer Vielzahl von Kommissionieraufträgen, für jeden Kommissionierauftrag eine Beladezone (73.1, 73.2, 73.3, 73.4) ermittelt, wenn die Beladungsordnung festgelegt wird, wobei die Beladezone (73.1, 73.2, 73.3, 73.4) ein Stellfach (38) oder mehrere Stellfächer (38) umfassen kann, sodass in einer Beladezone (73.1, 73.2, 73.3, 73.4) eine Anzahl an Liefergebinden (3) vorhanden ist.

7. Verfahren nach Anspruch 1, **dadurch gekennzeichnet, dass** der Datenträger (34) am Transportgestell (12) als Daten einen Identifikationscode enthält.

8. Verfahren nach Anspruch 7, **dadurch gekennzeichnet, dass** vor der Bereitstellung des zumindest einen Transportgestelles (12) an der Andockvorrichtung (54) im Pufferlager (53) das Transportgestell (12) mittels der Erfassungseinrichtung (74) identifiziert und dem Rechnersystem (75) des Pufferlagers (53) der Identifikationscode übermittelt wird, worauf dieses Transportgestell (12) an der Andockvorrichtung (54) bereitgestellt wird.

9. Verfahren nach einem der Ansprüche 1 bis 8, **dadurch gekennzeichnet, dass** das Versorgungslager (1) das erste Rechnersystem (2) und das Pufferlager (53) das zweite Rechnersystem (75) umfassen, die zum Datenaustausch über eine Datenübertragungseinrichtung miteinander verbunden sind, und dass dem zweiten Rechnersystem (75) nach dem Beladen des Transportgestelles (12) im Versorgungslager (1) Daten über die Beladungsordnung übermittelt werden.

10. Verfahren nach Anspruch 1, **dadurch gekennzeichnet, dass** der Datenträger (34) am Transportgestell (12) als Daten einen Identifikationscode und Daten über die Beladungsordnung enthält.

11. Verfahren nach einem der Ansprüche 1 bis 9, **dadurch gekennzeichnet, dass** das Lagerbediengerät (17) zu einem Kommissionierauftrag aus der Beladezone (73.1, 73.2, 73.3, 73.4) des zumindest einen Transportgestelles (12) eine maximale Anzahl an Liefergebinden (3) entnimmt.

12. System zur Auslieferung von Waren (4) in Liefergebinden (3), umfassend ein Versorgungslager (1), welches zumindest
- ein Lagersystem (5) zum Bereitstellen der Waren (4),
- ein Kommissioniersystem (6) zur Zusammenstellung der Waren (4) gemäß Kommissionieraufträgen in Liefergebinde (3) und zum Bereitstellen der die kommissionierte Ware (4) enthaltenden Liefergebinde (3),
- ein Beladesystem (11), welches mehrere Transportgestelle (12) umfasst, zum Bereitstellen der Transportgestelle (12) und zum Umladen der Liefergebinde (3) auf zumindest ein Transportgestell (12), wobei die Transportgestelle (12) jeweils in übereinander angeordneten horizontalen Regalzeilen und nebeneinander angeordneten vertikalen Regalspalten ausgebildete Stellfächer (38) aufweisen und auf welchem jeweils ein Datenträger (34) angebracht ist, welche die Liefergebinde (3) für einen oder mehrere Kommissionieraufträge aufnehmen, und
mit einer Erfassungseinrichtung (25, 26) zur Identifizierung des zumindest einen Transportgestelles (12) durch Lesen des Datenträgers (34) am Transportgestell (12),
- ein erstes Rechnersystem (2) zum Erfassen von Daten des Datenträgers (34),
- ein Übergabesystem (13) für die Übergabe des zumindest einen Transportgestelles (12) auf ein Transportsystem (14), insbesondere Transportfahrzeug, aufweist, und
ein Transportsystem (14) zum Transport von dem zumindest einen Transportgestell (12) vom Versorgungslager (1) zu einem Pufferlager (53), und
ein Pufferlager (53), welches
- ein Übernahmesystem (15) für die mittels des Transportsystems (14) angelieferten Transportgestelle (12),
- ein Bereitstellsystem (16) zum Bereitstellen von Transportgestellen (12) an zumindest einer Andockvorrichtung (54),
- ein automatisiert betriebenes Lagerbediengerät (17) zur Entnahme der Liefergebinde (3) aus dem Transportgestell (12) und Umlagerung zumindest einiger Liefergebinde (3) vom Transportgestell (12) auf Lagerfächer (55),
- Lagerfächer (55) zur Zwischenlagerung der Liefergebinde (3),
- zumindest eine Ausgabestation (56) mit einer Eingabevorrichtung (57) und zumindest einem Andienungsplatz (58), an welchem die Waren (4) in den Liefergebinden (3) bereitgestellt werden, wenn diese durch Eingabe eines Anforderungsbefehles an der Eingabevorrichtung (57) angefordert werden,
**dadurch gekennzeichnet, dass**
das Versorgungslager (1) das erste Rechnersystem (2) umfasst, welches eine Beladungsordnung für die Kommissionieraufträge ermittelt, um das zumindest eine Transportgestell (12) mit den Liefergebinden (3) in der vom ersten Rechnersystem (2) ermittelten Beladungsordnung auf die in übereinander angeordneten horizontalen Regalzeilen und/oder nebeneinander angeordneten vertikalen Regalspalten ausgebildeten Stellfächer (38) zu beladen, wobei mit der Beladungsordnung die Lagerpositionen der Liefergebinde (3) in den Stellfächern (38) und/oder Lagerpositionen der Liefergebinde (3) auf Stellplätzen (39a, 39b, 39c) in den Stellfächern (38) festgelegt sind, und
das Übernahmesystem (15) mit einer Erfassungseinrichtung (74) zur Identifizierung des zumindest einen Transportgestelles (12) durch Lesen des Datenträgers (34) am Transportgestell (12) versehen ist, und
das Pufferlager (53)
ein zweites Rechnersystem (75) zum Erfassen von Daten aus dem Datenträger (34) und Daten über die Beladungsordnung, welche nach dem Beladen des zumindest einen Transportgestelles (12) im Versorgungslager (1) bereitgestellt werden, umfasst, und
die zumindest eine Andockvorrichtung (54) für das Transportgestell (12) umfasst, welche das zumindest eine Transportgestell (12) derart positioniert, dass die in den übereinander angeordneten horizontalen Regalzeilen und nebeneinander angeordneten vertikalen Regalspalten ausgebildeten Stellfächer (38) im Zugriffsbereich des Lagerbediengerätes (17) liegen und das Lagerbediengerät (17) auf die Liefergebinde (3) an diesen Stellfächern (38) zugreifen kann, wobei das Lagerbediengerät (17) während der Bereitstellung des Transportgestelles (12) an der Andockvorrichtung (54) von den Stellfächern (38) entweder auf die Lagerfächer (55) im Pufferlager (53), wenn diese noch nicht an der Ausgabestation (56) angefordert wurden, oder auf zumindest einen Andienungsplatz (58), wenn diese an der Ausgabestation (56) angefordert wurden, umlagert.

13. System nach Anspruch 12, **dadurch gekennzeichnet, dass** das Transportgestell (12) eine Bodenplatte (40), an diesem aufragende Wandteile (41, 42) und eine Deckplatte (43) umfasst, wobei einer der Wandteile (42) zwischen einer Öffnungsstellung und einer Schließstellung verstellbar ist, wobei in der Öffnungsstellung die Liefergebinde (3) sämtlicher Stellfächer (38) zugänglich sind und in der Schließstellung die Liefergebinde (3) sämtlicher Stellfächer (38) lagegesichert sind.

14. System nach Anspruch 12 oder 13, **dadurch gekennzeichnet, dass** das Transportgestell (12) eine maximale Breite von 2100 mm, eine maximale Tiefe von 1500 mm und eine maximale Höhe von 2000 mm hat.

15. System nach einem der Ansprüche 12 bis 14, **dadurch gekennzeichnet, dass** das Transportgestell (12) maximal fünf Stellfächer (38) übereinander und maximal drei Stellfächer (38) nebeneinander aufweist und die Stellfächer (38) jeweils maximal drei Stellplätze (39a, 39b, 39c) ausbilden.

16. System nach einem der Ansprüche 12 bis 15, **dadurch gekennzeichnet, dass** die Lagerfächer (38) in zumindest einem ortsfest aufgestellten Lagerregal (67) in übereinander angeordneten horizontalen Regalzeilen und nebeneinander angeordneten vertikalen Regalspalten ausgebildet sind, wobei zumindest eines der Lagerregale (67) wenigstens einen Unterbringungsabschnitt (59) ausbildet, in welchem die Andockvorrichtung (54) vorgesehen ist, sodass das Transportgestell (12), wenn es an der Andockvorrichtung (54) positioniert ist, mit den Stellfächern (38) einen Lagerabschnitt des zumindest einen Lagerregales (67) bildet.

17. System nach einem der Ansprüche 12 bis 16, **dadurch gekennzeichnet, dass**, das Transportgestell (12) zumindest ein Lagesicherungsmittel (41, 42) aufweist, gegen welches die in den Stellfächern (38) abgestellten Liefergebinde (3) positioniert werden, wenn auf dem Transport des Traggestelles (12) die Liefergebinde (3) in den Stellfächern (38) verrutschen, oder zumindest ein Lagesicherungsmittel (49) aufweist, mittels welchem die in den Stellfächern (38) abgestellten Liefergebinde (3) lagefixierend gehalten werden, um eine Rutschbewegung der Liefergebinde (3) in den Stellfächern (38) zu verhindern.

18. System nach einem der Ansprüche 12 bis 17, **dadurch gekennzeichnet, dass** das Versorgungslager (1) das erste Rechnersystem (2) und das Pufferlager (53) das zweite Rechnersystem (75) umfassen, die zum Datenaustausch über eine Datenübertragungseinrichtung miteinander verbunden sind, um dem zweiten Rechnersystem (75) nach dem Beladen des Transportgestelles (12) im Versorgungslager (1) Daten über die Beladungsordnung zu übermitteln.

## Claims

1. A method for delivering items (4) in delivery containers (3), comprising the steps
i) providing the items (4),
ii) assembling the items (4) in delivery containers (3) in accordance with picking orders,
iii) providing at least one transport rack (12) having compartments (38) in horizontal shelf rows disposed one above the other and in adjacently disposed vertical shelf columns and to which a data carrier is (34) is attached,
iv) identifying the at least one transport rack (12) by means of a detection unit (25, 26) by reading the data carrier (34) and detecting data on a first computer system (2),
v) loading the at least one transport rack (12) with the delivery containers (3) for one or more picking orders,
vi) transferring the at least one transport rack (12) to a transport system (14), in particular a transport vehicle,
vii) transporting the at least one transport rack (12) by means of the transport system (14) from a supply depot (1) in which steps i) to vi) are executed to a buffer depot (53),
viii) providing the at least one transport rack (12) at a docking device (54) in the buffer depot (53),
ix) removing the delivery containers (3) from the transport rack (12) by means of an automated storage and retrieval device (17),
x) transferring at least some delivery containers (3) from the transport rack (12) to storage compartments (55) in the buffer depot (53),
xi) transporting the at least one delivery container (3) for a picking order to an issuing station (56) in the buffer depot (53) at which the items (4) in the delivery containers (3) are made available for collection from at least one service location (58) if they have been requested by inputting a request command at the issuing station (56),
wherein
a loading sequence for the delivery containers (3) for picking orders is determined by the first computer system (2) before step v) by means of which the storage positions of the delivery containers (3) in the compartments (38) and/or the storage positions of the delivery containers (3) in storage spaces (39a, 39b, 39c) in the compartments (38) are determined, and
the at least one transport rack (12) is loaded with the delivery containers (3) in step v) in the loading sequence determined by the first computer system (2) in the compartments (38) in horizontal shelf rows disposed one above the other and/or adjacently disposed vertical shelf columns, and
after step vii), the at least one transport rack (12) is transferred from the transport system (14) to a receiving system (15) in the buffer depot (53) and the at least one transport rack (12) is identified by means of a detection unit (74) provided on the receiving system (15) by reading the data carrier (34) and detecting data on a second computer system (75) in the buffer depot (53), and
data relating to the loading sequence is provided on the second computer system (75) after the at least one transport rack (12) has been loaded with the delivery containers (3) in the supply depot (1), and
the at least one transport rack (12) is provided at the docking device (54) in the buffer depot (53) such that the compartments (38) in horizontal shelf rows disposed one above the other and adjacently disposed vertical shelf columns are within the access range of the storage and retrieval device (17) and the storage and retrieval device (17) is able to access the delivery containers (3) in these compartments (38), and while the transport rack (12) is provided at the docking device (54), the delivery containers (3) are transferred by the storage and retrieval device (17) from the compartments (38) either to the storage compartments (55) in the buffer depot (53) if they have not yet been requested at the issuing station (56) or to the service location (58) if they have been requested at the issuing station (56).

2. The method according to claim 1, **characterized in that** in a compartment (38), the transport rack (12) has a single storage space (39a) in which the delivery container (3) is deposited or a plurality of storage spaces (39a, 39b, 39c) one behind the other in which a plurality of delivery containers (3) are deposited.

3. The method according to claim 1, **characterized in that** the transport rack (12) has a maximum of five compartments (38) one above the other and a maximum of three compartments (38) adjacent to one another and the compartments (38) each have a maximum of three storage spaces (39a, 39b, 39c) so that a transport rack (12) can be loaded with a maximum of 45 delivery containers (3), wherein the delivery container (3) has a length (L) of at most 700mm, a width (B) of at most 600mm and a height (H) of at most 400mm.

4. The method according to one of claims 1 to 3, **characterized in that** the delivery containers (3) are positioned in the compartment (38) against at least one position retaining means (41, 42) if the delivery containers (3) slide in the compartments (38) during transportation of the transport rack (12), or are held in a fixed position by at least one position retaining means (49) to prevent a sliding movement of the delivery containers (3) in the compartments (38).

5. The method according to one of claims 1 to 4, **characterized in that** after picking the items (4) in step ii), the delivery containers (3) are transported to a loading system (11) where the transport racks (12) are also held in readiness and loaded with the delivery containers (3), wherein before loading the transport racks (12) the delivery containers (3) are also identified by means of a detection unit (25, 26), and the delivery containers (3) are allocated to the respective transport rack (12) and to the respective compartments (38) in the transport rack (12) by the computer system (2).

6. The method according to one of claims 1 to 5, **characterized in that** the computer system (2) determines a loading zone (73.1, 73.2, 73.3, 73.4) for every picking order of a plurality of picking orders when determining the loading sequence, wherein the loading zone (73.1, 73.2, 73.3, 73.4) may comprise one compartment (38) or multiple compartments (38) so that a number of delivery containers (3) are available in a loading zone (73.1, 73.2, 73.3, 73.4).

7. The method according to claim 1, **characterized in that** the data carrier (34) on the transport rack (12) contains an identification code as data.

8. The method according to claim 7, **characterized in that** before providing the at least one transport rack (12) at the docking device (54) in the buffer depot (53), the transport rack (12) is identified by means of the detection unit (74) and the identification code is transmitted to the computer system (75) of the buffer depot (53), whereupon this transport rack (12) is provided at the docking device (54).

9. The method according to one of claims 1 to 8, **characterized in that** the supply depot (1) comprises the first computer system (2) and the buffer depot (53) comprises the second computer system (75) which are connected to one another in order to exchange data via a data transmission device and after loading the transport rack (12) in the supply depot (1), data relating to the loading sequence is transmitted to the second computer system (75).

10. The method according to claim 1, **characterized in that** the data carrier (34) on the transport rack (12) contains an identification code and data relating to the loading sequence.

11. The method according to one of claims 1 to 9, **characterized in that** the storage and retrieval device (17) removes a maximum number of delivery containers (3) for a picking order from the loading zone (73.1, 73.2, 73.3, 73.4) of the at least one transport rack (12).

12. A system for delivering items (4) in delivery containers (3), comprising a supply depot (1), which comprises at least
- a storage system (5) for provisioning the items (4),
- a picking system (6) for assembling the items (4) in accordance with picking orders in delivery containers (3) and for providing the delivery containers (3) containing the picked items (4),
- a loading system (11) comprising several transport racks (12) for providing the transport racks (12) and for transferring the delivery containers (3) to at least one transport rack (12), the transport racks (12) each having compartments (38) in horizontal shelf rows disposed one above the other and in adjacently disposed vertical shelf columns and to each of which a data carrier (34) is attached, which receive the delivery containers (3) for one or more picking orders, and
having a detection unit (25, 26) for identifying the at least one transport rack (12) by reading the data carrier (34) on the transport rack (12),
- a first computer system (2) for detecting data of the data carrier (34),
- a transfer system (13) for transferring the at least one transport rack (12) to a transport system (14), in particular a transport vehicle, and
a transport system (14) for transporting the at least one transport rack (12) from the supply depot (1) to a buffer depot (53), and
a buffer depot (53), which comprises
- a receiving system (15) for the transport racks (12) delivered by means of the transport system (14),
- a provisioning system (16) for provisioning transport racks (12) at at least one docking device (54),
- an automated storage and retrieval device (17) for removing the delivery containers (3) from the transport rack (12) and transferring at least some delivery containers (3) from the transport rack (12) to storage compartments (55),
- storage compartments (55) for temporarily storing the delivery containers (3),
- at least one issuing station (56) having an input device (57) and at least one service location (58) at which the items (4) in the delivery containers (3) are made available if they have been requested by inputting a request command at the input device (57), **characterized in that**
the supply depot (1) comprises the first computer system (2) which determines a loading sequence for the picking orders for loading the at least one transport rack (12) with the delivery containers (3) in the loading sequence determined by the first computer system (2) in the compartments (38) in horizontal shelf rows disposed one above the other and/or in adjacently disposed vertical shelf columns, wherein the storage positions of the delivery containers (3) in the compartments (38) and/or storage positions of the delivery containers (3) in storage spaces (39a, 39b, 39c) in the compartments (38) are determined by means of the loading sequence, and
the receiving system (15) is provided with a detection unit (74) for identifying the at least one transport rack (12) by reading the data carrier (34) on the transport rack (12), and
the buffer depot (53) comprises
a second computer system (75) for detecting data from the data carrier (34) and data relating to the loading sequence which is provided after loading the at least one transport rack (12) in the supply depot (1), and
the at least one docking device (54) for the transport rack (12) which positions the at least one transport rack (12) such that the compartments (38) formed by the horizontal shelf rows disposed one above the other and adjacently disposed vertical shelf columns are within the access range of the storage and retrieval device (17) and the storage and retrieval device (17) is able to access the delivery containers (3) in these compartments (38), and while the transport rack (12) is provided at the docking device (54), the storage and retrieval device (17) transfers them from the compartments (38) either to the storage compartments (55) in the buffer depot (53) if they have not yet been requested at the issuing station (56) or to at least one service location (58) if they have been requested at the issuing station (56).

13. The system according to claim 12, **characterized in that** the transport rack (12) comprises a base plate (40), wall parts (41, 42) extending up therefrom and a top plate (43), wherein one of the wall parts (42) can be moved between an open position and a closed position, wherein in the open position the delivery containers (3) of all the compartments (38) are accessible and in the closed position the delivery containers (3) of all the compartments (38) are secured in place.

14. The system according to claim 12 or 13, **characterized in that** the transport rack (12) has a maximum width of 2100 mm, a maximum depth of 1500 mm and a maximum height of 2000 mm.

15. The system according to one of claims 12 to 14, **characterized in that** the transport rack (12) comprises at most five compartments (38) one above the other and at most three compartments (38) adjacent to one another and the compartments (38) each have at most three storage spaces (39a, 39b, 39c).

16. The system according to one of claims 12 to 15, **characterized in that** the storage compartments (38) are provided in at least one stationary storage rack (67) in horizontal shelf rows disposed one above the other and in adjacently disposed vertical shelf columns, wherein at least one of the storage racks (67) forms a housing section (59) in which the docking device (54) is provided so that when positioned at the docking device (54), the transport rack (12) forms a storage section of the at least one storage rack (67) by means of the compartments (38).

17. The system according to one of claims 12 to 16, **characterized in that** the transport rack (12) has at least one position retaining means (41, 42) against which the delivery containers (3) in the compartments (38) are positioned if the delivery containers (3) slide in the compartments (38) during transportation of the transport rack (12), or has at least one position retaining means (49) by means of which the delivery containers (3) placed in the compartments (38) are held in a fixed position to prevent a sliding movement of the delivery containers (3) in the compartments (38).

18. The system according to one of claims 12 to 17, **characterized in that** the supply depot (1) comprises the first computer system (2) and the buffer depot (53) comprises the second computer system (75) which are connected to one another in order to exchange data via a data transmission device in order to transmit data relating to the loading sequence to the second computer system (75) after loading the transport rack (12) in the supply depot (1).

## Revendications

1. Procédé de livraison d'articles (4) dans des emballages de livraison (3), comprenant les étapes suivantes :
i) mise à disposition des articles (4),
ii) regroupement des articles (4) selon des instructions de préparation de commandes dans un emballage de livraison (3),
iii) mise à disposition d'au moins un châssis de transport (12) qui est conçu avec des compartiments de rangement (38) constitués de lignes de rayonnages horizontaux superposées et des colonnes de rayonnages verticaux juxtaposées et sur lequel est monté un support de données (34),
iv) identification de l'au moins un châssis de transport (12) au moyen d'un dispositif de détection (25, 26) par la lecture du support de données (34) et la détection de données au niveau d'un premier système informatique (2),
v) chargement de l'au moins un châssis de transport (12) avec les emballages de livraison (3) pour une ou plusieurs instructions de préparation de commandes,
vi) transfert de l'au moins un châssis de transport (12) sur un système de transport (14), plus particulièrement un véhicule de transport,
vii) transport de l'au moins un châssis de transport (12) au moyen du système de transport (14) d'un entrepôt d'alimentation (1), dans lequel les étapes i) à vi) sont exécutées, vers un entrepôt tampon (53),
viii) mise à disposition de l'au moins un châssis de transport (12) dans l'entrepôt tampon (53) au niveau d'un dispositif d'arrimage (54),
ix) retrait de l'emballage de livraison (3) hors du châssis de transport (12) au moyen d'un appareil de commande d'entrepôt (17) fonctionnant automatiquement,
x) transfert d'au moins certains emballages de livraison (3) du châssis de transport (12) vers des compartiments de stockage (55) dans l'entrepôt tampon (53),
xi) transport de l'au moins un emballage de livraison (3) pour une instruction de préparation de commande vers une station de distribution (56) dans l'entrepôt tampon (53), au niveau de laquelle les articles (4) dans les emballages de livraison (3) sont mis à disposition sur au moins un emplacement de mise à disposition (58) en vue de leur collecte lorsque ceux-ci sont demandés au niveau de la station de distribution (56) par l'entrée d'une instruction de demande,
**caractérisé par**
la détermination d'un ordre de chargement pour l'emballage de livraison (3) selon des instructions de préparation de commandes par le premier système informatique (2) avant l'étape v), avec lequel les positions de stockage de l'emballage de livraison (3) dans les compartiments de rangement (38) et/ou les positions de stockage de l'emballage de livraison (3) sur des emplacements de rangement (39a, 39b, 39c) dans les emplacements de rangement (38) sont déterminées et
le chargement de l'au moins un châssis de transport (12) avec les emballages de livraison (3) à l'étape v) dans l'ordre de chargement déterminé par le premier système informatique (2) sur les emplacements de rangement (38) constitués de lignes de rayonnages horizontaux superposées et/ou de colonnes de rayonnages verticaux juxtaposées et
transfert de l'au moins un châssis de transport (12) après l'étape vii) du système de transport (14) vers un système de prise en charge (15) dans l'entrepôt tampon (53) et identification de l'au moins un châssis de transport (12) au moyen d'un dispositif de détection (74) prévu sur le système de prise en charge (15) par la lecture du support de données (34) et la détection de données au niveau d'un deuxième système informatique (75) dans l'entrepôt tampon (53) et
mise à disposition des données concernant l'ordre de chargement au niveau du deuxième système informatique (75), une fois l'au moins un châssis de transport (12) avec les emballages de livraison (3) chargé dans l'entrepôt d'alimentation (1) et
mise à disposition de l'au moins un châssis de transport (12) au niveau du dispositif d'arrimage (54) dans l'entrepôt tampon (53) de façon à ce que les compartiments de rangement (38), constitués de lignes de rayonnages horizontaux superposées et de colonnes de rayonnages verticaux juxtaposées, se trouvent dans la zone d'accès de l'appareil de commande d'entrepôt (17) et l'appareil de commande d'entrepôt (17) peut accéder à l'emballage de livraison (3) au niveau de ces compartiments de rangement (38) et transfert des emballages de livraison (3) par l'appareil de commande d'entrepôt (17) pendant la mise à disposition du châssis de transport (12) au niveau du dispositif d'arrimage (54) à partir des compartiments de rangement (38) soit vers les compartiments de stockage (55) dans l'entrepôt tampon (53), lorsque ceux-ci n'ont pas encore été demandés au niveau de la station de distribution (56), soit vers l'emplacement de mise à disposition (58), lorsque ceux-ci ont été demandés au niveau de la station de distribution (56).

2. Procédé selon la revendication 1, **caractérisé en ce que** le châssis de transport (12) comprend, dans un compartiment de rangement (38), un seul emplacement de rangement (39a), sur lequel l'emballage de livraison (3) est déposé, ou comprend une pluralité d'emplacements de rangement (39a, 39b, 39c) disposés les uns derrière les autres, sur lesquels une pluralité d'emballages de livraison (3) sont déposés.

3. Procédé selon la revendication 1, **caractérisé en ce que** le châssis de transport (12) comprend au maximum cinq compartiments de rangement (38) superposés et au maximum trois compartiments de rangement (38) juxtaposés et les compartiments de rangement (38) sont constitués chacun au maximum de trois emplacements de rangement (39a, 39b, 39c), de façon à ce qu'un châssis de transport (12) avec au maximum 45 emballages de livraison (3) soit chargé, dans lequel l'emballage de livraison (3) présente une longueur (L) de 700 mm maximum, une largeur (B) de 600 mm maximum et une hauteur (H) de 400 mm maximum.

4. Procédé selon l'une des revendications 1 à 3, **caractérisé en ce que** les emballages de livraison (3) sont disposés dans le compartiment de rangement (38), contre au moins un moyen de maintien en position (41, 42) lorsque, lors du déplacement du châssis de transport (12), les emballages de livraison (3) glissent dans les compartiments de rangement (38), ou sont maintenus fixés par au moins un moyen de maintien en position (49) afin d'empêcher un mouvement de glissement des emballages de livraison (3) dans les compartiments de rangement (38).

5. Procédé selon l'une des revendications 1 à 4, **caractérisé en ce que** les emballages de livraison (3) sont transportés, après la mise à disposition de l'article (4) à l'étape ii), vers un système de chargement (11) où les châssis de transport (12) sont également préparés et chargés avec les emballages de livraison (3), dans lequel les emballages de livraison (3) sont également identifiés avant le chargement des châssis de transport (12) au moyen d'un dispositif de détection (25, 26) et **en ce que** le système informatique (2) effectue une répartition des emballages de livraison (3) sur le châssis de transport (12) respectif et les compartiments de rangement (38) respectifs dans le châssis de transport (12).

6. Procédé selon l'une des revendications 1 à 5, **caractérisé en ce que** le système informatique (2) détermine, à partir d'une pluralité d'instructions de préparation de commandes, pour chaque instruction de préparation de commande, une zone de chargement (73.1, 73.2, 73.3, 73.4), lorsque l'ordre de chargement est déterminé, dans lequel la zone de chargement (73.1, 73.2, 73.3, 73.4) peut comprendre un compartiment de rangement (38) ou plusieurs compartiments de rangement (38), de façon à ce que, dans une zone de chargement (73.1, 73.2, 73.3, 73.4), plusieurs emballages de livraison (3) soient présents.

7. Procédé selon la revendication 1, **caractérisé en ce que** le support de donnés (34) sur le châssis de transport (12) contient, en tant que données, un code d'identification.

8. Procédé selon la revendication 7, **caractérisé en ce que**, avant la mise à disposition de l'au moins un châssis de transport (12) au niveau du dispositif d'arrimage (54) dans l'entrepôt tampon (53), le châssis de transport (12) est identifié au moyen du dispositif de détection (74) et le code d'identification est transmis au système informatique (75) de l'entrepôt tampon (53), ce châssis de transport (12) étant ensuite mis à disposition au niveau du dispositif d'arrimage (54).

9. Procédé selon l'une des revendications 1 à 8, **caractérisé en ce que** l'entrepôt d'alimentation (1) comprend le premier système informatique (2) et l'entrepôt tampon (53) comprend le deuxième système informatique (75), qui sont reliés entre eux pour un échange de données par l'intermédiaire d'un dispositif de transmission de données, et **en ce que** les données concernant l'ordre de chargement sont transmises au deuxième système informatique (75) après le chargement du châssis de transport (12) dans l'entrepôt d'alimentation (1).

10. Procédé selon la revendication 1, **caractérisé en ce que** le support de données (34) sur le châssis de transport (12) contient, en tant que données, un code d'identification et des données concernant l'ordre de chargement.

11. Procédé selon l'une des revendications 1 à 9, **caractérisé en ce que**, selon une instruction de préparation de commande, l'appareil de commande d'entrepôt (17) retire de la zone de chargement (73.1, 73.2, 73.3, 73.4) de l'au moins un châssis de transport (12) un nombre maximal d'emballages de livraison (3).

12. Système de livraison d'articles (4) dans des emballages de livraison (3) comprenant un entrepôt d'alimentation (1) qui comprend au moins
- un système de stockage (5) pour la mise à disposition des articles (4),
- un système de préparation de commandes (6) pour le regroupement des articles (4), selon des instructions de préparation de commandes, dans des emballages de livraison (3) et pour la mise à disposition des emballages de livraison (3) contenant les articles (4) préparés,
- un système de chargement (11) qui comprend plusieurs châssis de transport (12), pour la mise à disposition des châssis de transport (12) et pour le transfert des emballages de livraison (3) vers au moins un châssis de transport (12), dans lequel les châssis de transport (12) comprennent chacun des compartiments de rangement (38) constitués de lignes de rayonnages horizontaux superposées et de colonnes de rayonnages verticaux juxtaposées et sur chacun desquels est monté un support de données (34), qui logent les emballages de livraison (3) pour une ou plusieurs instructions de préparation de commandes et
avec un dispositif de détection (25, 26) pour l'identification de l'au moins un châssis de transport (12) par la lecture du support de données (34) au niveau du châssis de transport (12),
- un premier système informatique (2) pour la détection des données du support des données (34),
- un système de transfert (13) pour le transfert de l'au moins un châssis de transport (12) vers un système de transport (14), plus particulièrement un véhicule de transport et un système de transport (14) pour le transport de l'au moins un châssis de transport (12) de l'entrepôt d'alimentation (1) vers un entrepôt tampon (53) et
un entrepôt tampon (53) qui comprend
- un système de prise en charge (15) pour les châssis de transport (12) livrés au moyen du système de transport (14),
- un système de mise à disposition (16) pour la mise à disposition de châssis de transport (12) au niveau d'au moins un dispositif d'arrimage (54),
- un appareil de commande d'entrepôt (17) fonctionnant automatiquement pour le prélèvement des emballages de livraison (3) hors du châssis de transport (12) et le transfert d'au moins certains emballages de livraison (3) du châssis de transport (12) vers des compartiments de stockage (55),
- des compartiments de stockage (55) pour l'entreposage des emballages de livraison (3),
- au moins une station de distribution (56) avec un dispositif d'entrée (57) et au moins un emplacement de mise à disposition (58) au niveau duquel les articles (4) dans les emballages de livraison (3) sont mis à disposition, lorsque ceux-ci ont été demandés par l'entrée d'une instruction de demande au niveau du dispositif d'entrée (57),
**caractérisé en ce que**
l'entrepôt d'alimentation (1) comprend le premier système informatique (2) qui détermine un ordre de chargement pour les instructions de préparation de commandes afin de charger l'au moins un châssis de transport (12) avec les emballages de livraison (3), dans l'ordre de chargement déterminé par le premier système informatique (2), sur les compartiments de rangement (38) constitués de lignes de rayonnages horizontaux superposées et de colonnes de rayonnages verticaux juxtaposées, dans lequel, avec l'ordre de chargement, les positions de stockage des emballages de livraison (3) dans les compartiments de rangement (38) et/ou les positions de stockage des emballages de livraison (3) sur des emplacements de rangement (39a, 39b, 39c) dans les compartiments de rangement (38) sont déterminées et
le système de prise en charge (15) est muni d'un dispositif de détection (74) pour l'identification de l'au moins un châssis de transport (12) par la lecture du support de données (34) au niveau du châssis de transport (12) et
l'entrepôt tampon (53)
comprend un deuxième système informatique (75) pour la détection de données provenant du support de données (34) et des données concernant l'ordre de chargement, qui sont mises à disposition après le chargement de l'au moins un châssis de transport (12) dans l'entrepôt d'alimentation (1),
comprend l'au moins un dispositif d'arrimage (54) pour le châssis de transport (12), qui positionne l'au moins un châssis de transport (12) de façon à ce que les compartiments de rangement (38) constitués de lignes de rayonnages horizontaux superposées et de colonnes de rayonnages verticaux juxtaposées se trouvent dans la zone d'accès de l'appareil de commande d'entrepôt (17) et l'appareil de commande d'entrepôt (17) puisse accéder aux emballages de livraison (3) au niveau de ces compartiments de rangement (38), dans lequel l'appareil de commande d'entrepôt (17) les transfère, pendant la mise à disposition du châssis de transport (12) au niveau du dispositif d'arrimage (54), des compartiments de rangement (38) soit vers les compartiments de stockage (55) dans l'entrepôt tampon (53), lorsque ceux-ci n'ont pas encore été demandés au niveau de la station de distribution (56) soit vers au moins un emplacement de mise à disposition (58) lorsque ceux-ci ont été demandés au niveau de la station de distribution (56).

13. Système selon la revendication 12, **caractérisé en ce que** le châssis de transport (12) comprend une plaque de fond (40), des parties de parois (41, 42) posées sur celle-ci et une plaque de recouvrement (43), dans lequel une des parties de parois (42) peut être déplacée entre une position d'ouverture et une position de fermeture, dans lequel, dans la position d'ouverture, les emballages de livraison (3) de tous les compartiments de rangement (38) sont accessibles et, dans la position de fermeture, les emballages de livraison (3) de tous les compartiments de rangement (38) sont maintenus en position.

14. Système selon la revendication 12 ou 13, **caractérisé en ce que** le châssis de transport (12) présente une largeur maximale de 2100 mm, une profondeur maximale de 1500 mm et une hauteur maximale de 2000 mm.

15. Système selon l'une des revendications 12 à 14, **caractérisé en ce que** le châssis de transport (12) comprend au maximum cinq compartiments de rangement (38) superposés et au maximum trois compartiments de rangement (38) juxtaposés et les compartiments de rangement (38) sont constitués chacun au maximum de trois emplacements de rangement (39a, 39b, 39c).

16. Système selon l'une des revendications 12 à 15, **caractérisé en ce que** les compartiments de stockage (38) sont constitués, dans au moins un rayonnage de stockage (67) fixe, de lignes de rayonnages horizontaux superposées et de colonnes de rayonnages verticaux juxtaposées, dans lequel au moins un des rayonnages de stockage (67) est constitué d'au moins une portion de logement (59) dans laquelle le dispositif d'arrimage (54) est prévu, de façon à ce que le châssis de transport (12), lorsqu'il est positionné au niveau du dispositif d'arrimage (54), forme avec les compartiments de rangement (38), une portion de stockage de l'au moins un rayonnage de stockage (67).

17. Système selon l'une des revendications 12 à 16, **caractérisé en ce que** le châssis de transport (12) comprend au moins un moyen de maintien en position (41, 42), contre lequel les emballages de livraison (3) déposés dans les compartiments de rangement (38) sont positionnés lorsque, lors du transport du châssis de transport (12), les emballages de livraison (3) glissent dans les compartiments de rangement (38), ou comprend au moins un moyen de maintien en position (49) à l'aide duquel les emballages de livraison (3) déposés dans les compartiments de rangement (38) sont maintenus de manière fixe, afin d'empêcher un mouvement de glissement des emballages de livraison (3) dans les compartiments de rangement (38).

18. Système selon l'une des revendications 12 à 17, **caractérisé en ce que** l'entrepôt d'alimentation (1) comprend le premier système informatique (2) et l'entrepôt tampon (53) comprend le deuxième système informatique (75), qui sont reliés entre eux pour un échange de données par l'intermédiaire d'un dispositif de transmission de données, afin de transmettre au deuxième système informatique (75), après le chargement du châssis de transport (12) dans l'entrepôt d'alimentation (1), des données concernant l'ordre de chargement.
